# EUROPEAN PATENT SPECIFICATION

(11) **EP 4 257 748 B1**
(45) Date of publication and mention of the grant of the patent: **19.11.2025**
(21) Application number: 23166819.5
(22) Date of filing: 05.04.2023
(51) Int. Cl.: E01C 19/48

(54) **CONTROL SYSTEM OF A ROAD PAVING MACHINE**
STEUERUNGSSYSTEM FÜR EINEN STRASSENFERTIGER
SYSTÈME DE COMMANDE DE FINISSEUSE DE ROUTE

(30) Priority: 08.04.2022 JP 2022064600
(43) Date of publication of application: 11.10.2023
(73) Proprietor: Sumitomo (S.H.I.) Construction Machinery Co., Ltd., Shinagawa-ku Tokyo 141-6025 (JP)
(72) Inventor: TERAMOTO, Tota, Chiba 263-0001 (JP)
(74) Representative: Louis Pöhlau Lohrentz

(56) References cited:
- WO-A1-2017/010541
- US-A1- 2018 030 672
- US-A1- 2022 002 953

## Description

### BACKGROUND OF THE INVENTION

### Field of the Invention

The present disclosure relates to a control system for a road paving machine.

### Description of Related Art

In the related art, an asphalt finisher that controls a traveling direction of a vehicle body while detecting a paving mold immediately below with two optical sensors arranged on a right side of the vehicle body to be adjacent to each other in a vehicle width direction is known (see Japanese Examined Patent Publication No. H3-40163). Specifically, the asphalt finisher changes the traveling direction of the vehicle body such that the vehicle body is moved to a left side in a case where a right optical sensor does not detect the paving mold while a left optical sensor detects the paving mold and such that the vehicle body is moved to the right side in a case where the right optical sensor detects the paving mold while the left optical sensor does not detect the paving mold. This is to enable the vehicle body to move along the paving mold. Further, United States Patent Publication No. 2018/0030672 discloses a control system for a road paver which automatically controls the road paver and assists an operator to control the road paver based on an identified position of an edge line serving as a reference line for a mat to be laid by the road paver. In addition, International Patent Publication No. WO 2017/010541 discloses an asphalt finisher including an image pickup device which obtains a frontal image of the asphalt finisher, and United States Patent Publication No. 2022/0002953 discloses a control device of an asphalt finisher which supports an operation of aligning a center of a tractor of the asphalt finisher with a center of a pavement target area.

### SUMMARY OF THE INVENTION

However, in the configuration, there is a possibility in which the asphalt finisher meanders even in a case where a straight road is constructed. This is because the traveling direction of the vehicle body is changed such that a deviation between the position of the optical sensor and the position of the paving mold in the vehicle width direction is detected and then the deviation is eliminated.

Thus, it is desirable to provide a control system for a road paving machine that can appropriately determine the traveling direction of the road paving machine such as an asphalt finisher.

According to an embodiment of the present disclosure, there is provided a road paving machine including a tractor, a hopper that is provided in front of the tractor and that receives a paving material, a conveyor that feeds the paving material in the hopper to a rear of the tractor, a screw that spreads the paving material fed by the conveyor at the rear of the tractor, a screed that levels the paving material spread by the screw at a rear of the screw, and a control device that includes a traveling trajectory generation unit, in which the traveling trajectory generation unit sets a traveling trajectory of the tractor, which is a trajectory followed by a center point of the road paving machine, based on information related to a feature that defines a boundary line of a construction target range positioned in front of the tractor, and in a case where the construction target range includes a widening portion where a width of the construction target range partially extends in a width direction of the construction target range, the traveling trajectory of the tractor is set assuming that the widening portion does not exist when a length of the widening portion in a traveling direction of the tractor is equal to or smaller than a predetermined distance.

The control system described above can appropriately determine the traveling direction of the road paving machine.

### BRIEF DESCRIPTION OF THE DRAWINGS

Fig. 1 is a side view of an asphalt finisher.
Fig. 2 is a top view of the asphalt finisher.
Fig. 3 is a diagram showing a configuration example of a control system.
Fig. 4 is a schematic perspective view of a paving mold.
Fig. 5 is a flowchart showing an example of a flow of target setting processing.
Fig. 6 is a flowchart showing an example of a flow of traveling trajectory generation processing.
Fig. 7 is a flowchart showing an example of a flow of transport amount adjusting processing.
Fig. 8 is a top view of a construction site that includes a road having a short widening portion.
Fig. 9 is a top view of a construction site that includes a road having a long widening portion.
Fig. 10 is a side view of another configuration example of the asphalt finisher.

### DETAILED DESCRIPTION OF THE INVENTION

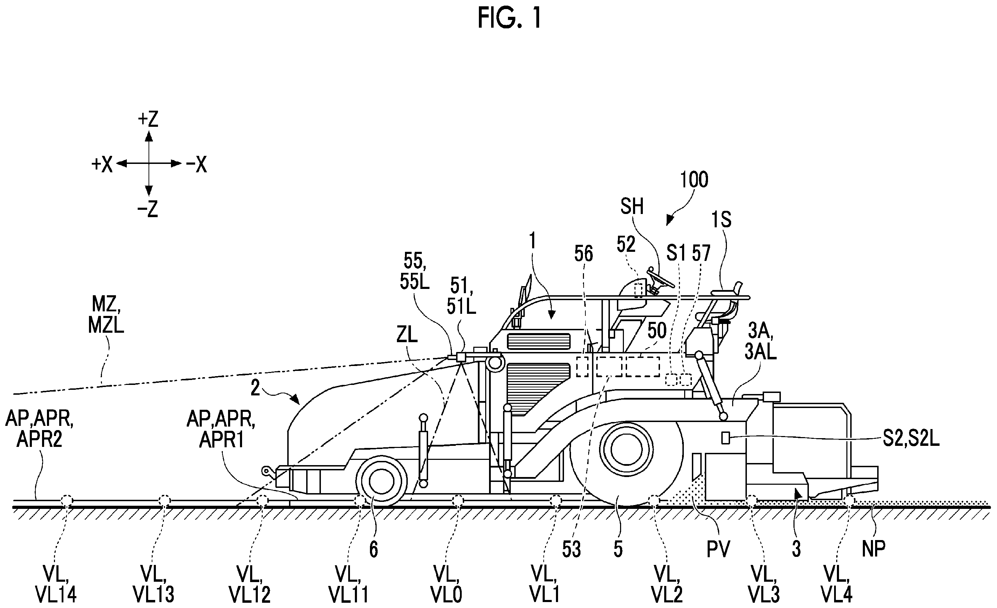

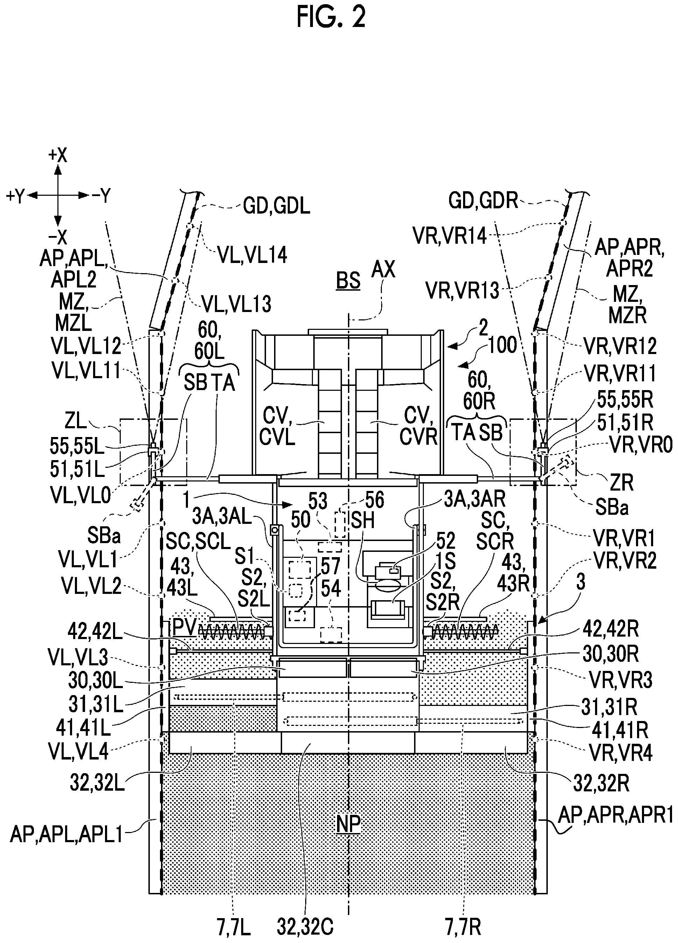

Fig. 1 is a side view of an asphalt finisher 100 that is an example of a road machine according to an embodiment of the present disclosure. Fig. 2 is a top view of the asphalt finisher 100. In the shown example, the asphalt finisher 100 is a wheel type asphalt finisher and is mainly configured by a tractor 1, a hopper 2, and a screed 3. Hereinafter, a direction of the hopper 2 viewed from the tractor 1 (+X direction) will be referred to as forward, and a direction of the screed 3 viewed from the tractor 1 (-X direction) will be referred to as rearward.

The tractor 1 is a mechanism for moving the asphalt finisher 100. In the shown example, the tractor 1 rotates a rear wheel 5 using a rear wheel traveling hydraulic motor and rotates a front wheel 6 using a front wheel traveling hydraulic motor to move the asphalt finisher 100. The rear wheel traveling hydraulic motor and the front wheel traveling hydraulic motor rotate by receiving supply of a hydraulic oil from a hydraulic pump. However, the front wheel 6 may be a driven wheel.

The asphalt finisher 100 may be a crawler type asphalt finisher. In this case, a combination of the rear wheel 5 and the front wheel 6 is replaced with a combination of a left crawler and a right crawler.

The hopper 2 is a mechanism for receiving a paving material PV. In the shown example, the hopper 2 is provided in front of the tractor 1 and is configured to be capable of being opened and closed in a vehicle width direction (Y-axis direction) by a hopper cylinder. The asphalt finisher 100 usually receives the paving material PV (for example, an asphalt mixture) from a loading platform of a dump truck when the hopper 2 is in a fully open state. The dump truck is an example of a transport vehicle that transports the paving material PV. Figs. 1 and 2 show that the hopper 2 is in a fully open state. When the paving material PV in the hopper 2 decreases during construction, an operator of the asphalt finisher 100 closes the hopper 2 and collects the paving material PV near an inner wall of the hopper 2 at a central portion of the hopper 2. This is to enable a conveyor CV which is at the central portion of the hopper 2 to feed the paving material PV to the rear of the tractor 1. The paving material PV fed to the rear of the tractor 1 by the conveyor CV is spread in the vehicle width direction behind the tractor 1 and before the screed 3 by a screw SC.

The conveyor CV and the screw SC are examples of a transport device that transports the paving material PV. In the shown example, the screw SC includes a left screw SCL for spreading the paving material PV on the left of a front-rear axis AX of the asphalt finisher 100 and a right screw SCR for spreading the paving material PV on the right of the front-rear axis AX. In addition, the conveyor CV includes a left conveyor CVL for transporting the paving material PV toward the left screw SCL and a right conveyor CVR for transporting the paving material PV toward the right screw SCR. That is, the transport device includes a left transport device which includes the left conveyor CVL and the left screw SCL and a right transport device which includes the right conveyor CVR and the right screw SCR.

For the sake of clarity, Figs. 1 and 2 omit showing the paving material PV in the hopper 2, show the paving material PV spread by the screw SC in a coarse dot pattern, and show a newly constructed pavement body NP leveled by the screed 3 in a fine dot pattern.

The screed 3 is a mechanism for leveling the paving material PV. In the shown example, the screed 3 includes a front screed 30 and a rear screed 31. The front screed 30 includes a left front screed 30L and a right front screed 30R. The rear screed 31 is a screed that is capable of expanding and contracting in the vehicle width direction and includes a left rear screed 31L and a right rear screed 31R. Specifically, the rear screed 31 is expanded and contracted by a screed expanding and contracting cylinder 7 provided in the screed 3. More specifically, the screed expanding and contracting cylinder 7 includes a left screed expanding and contracting cylinder 7L and a right screed expanding and contracting cylinder 7R. In addition, the left rear screed 31L is expanded and contracted by the left screed expanding and contracting cylinder 7L, and the right rear screed 31R is expanded and contracted by the right screed expanding and contracting cylinder 7R.

In addition, the screed 3 is a floating screed pulled by the tractor 1 and is connected to the tractor 1 via a leveling arm 3A. The leveling arm 3A includes a left leveling arm 3AL disposed on a left side of the tractor 1 and a right leveling arm 3AR disposed on a right side of the tractor 1. An end portion leveling device may be disposed at an end portion of the rear screed 31.

A side plate 41 is attached to a distal end of the rear screed 31. In the shown example, a left side plate 41L is attached to a left end of the left rear screed 31L, and a right side plate 41R is attached to a right end of the right rear screed 31R.

A tread plate 32 is attached to the rear of the screed 3. Specifically, the tread plate 32 is attached to the rear of the screed 3 such that a worker at the rear of the screed 3 can move back and forth in the vehicle width direction without stepping on the newly constructed pavement body NP. In the shown example, the tread plate 32 includes a central tread plate 32C attached to the rear of the front screed 30, a left tread plate 32L attached to the rear of the left rear screed 31L, and a right tread plate 32R attached to the rear of the right rear screed 31R.

A mold board 42 is attached to a front portion of the screed 3. The mold board 42 is configured to be capable of adjusting the amount of the paving material PV staying in front of the screed 3. The paving material PV reaches under the screed 3 through a gap between a lower end of the mold board 42 and a roadbed BS. In the shown example, the mold board 42 includes a left mold board 42L disposed in front of the left rear screed 31L and a right mold board 42R disposed in front of the right rear screed 31R.

The screw SC is disposed in front of the mold board 42, and a retaining plate 43 is disposed in front of the screw SC. Specifically, the retaining plate 43 includes a left retaining plate 43L disposed in front of the left screw SCL and a right retaining plate 43R disposed in front of the right screw SCR. The retaining plate 43 may be omitted.

A traveling speed sensor S1, a height sensor S2, a controller 50, an object detection device 51, a vehicle-mounted display device 52, a steering device 53, a screed expanding and contracting device 54, a front monitoring device 55, a conveyor control device 56, and a screw control device 57 are mounted on the tractor 1.

The traveling speed sensor S1 is configured to be capable of detecting a traveling speed of the asphalt finisher 100. In the shown example, the traveling speed sensor S1 is a wheel speed sensor and is capable of detecting the rotation angular speed and the rotation angle of the rear wheel 5 and the traveling speed and the traveling distance of the asphalt finisher 100.

The height sensor S2 is configured to be capable of detecting the height of a pile of the paving material PV (paving material height) spread in the vehicle width direction behind the tractor 1 and before the screed 3 by the screw SC. In the shown example, the height sensor S2 is an ultrasound sensor that detects a distance to a surface of the pile of the paving material PV and is attached to a side surface of the tractor **1.** However, the height sensor S2 may be attached to a side surface (inner side surface) of the side plate 41. Specifically, the height sensor S2 includes a left height sensor S2L that detects the height of a pile of the paving material PV spread by the left screw SCL (left paving material height) and a right height sensor S2R that detects the height of a pile of the paving material PV spread by the right screw SCR (right paving material height). The height sensor S2 may be a monocular camera, a stereo camera, a LIDAR, a millimeter wave radar, a laser radar, a laser scanner, a distance image camera, a laser range finder, a combination thereof, or the like. In addition, the height sensor S2 may be omitted.

The controller 50 is a control device that controls the asphalt finisher 100. In the shown example, the controller 50 is configured by a microcomputer including a CPU, a volatile storage device, a non-volatile storage device, and the like. Each function of the controller 50 is realized as the CPU executes a program stored in the non-volatile storage device. However, each function of the controller 50 is not only realized by software but may be realized by hardware, or may be realized by a combination of hardware and software.

The object detection device 51 is an example of an information acquisition device (space recognition device) that acquires information of surroundings of the asphalt finisher 100 and is configured to acquire information related to a feature within a predetermined range of a road which is a construction target and to be capable of outputting the acquired information to the controller 50. That is, the object detection device 51 is configured to use the predetermined range of the road which is the construction target as a monitoring target. The predetermined range on the road is, for example, a range that is positioned in front of the screed 3 and that includes a boundary line of the road. In the shown example, the predetermined range on the road is a range that has a front-rear width and a right-left width which are larger than the width of a paving mold and for example, is a range of 2 meters square.

The range positioned in front of the screed 3 is, for example, a range positioned in front of the hopper 2, a range positioned in front of an axle of the front wheel 6, a range positioned in front of an axle of the rear wheel 5, a range positioned in front of the screw SC, and the like.

The feature within the predetermined range includes, for example, the roadbed BS and an object AP outside the roadbed BS. The object AP is a feature used in order to determine the position of an end surface of a laid pavement body in a width direction. In the examples shown in Figs. 1 and 2, the object AP is a paving mold that has a predetermined thickness (height) and includes a left object APL on the left side of the asphalt finisher 100 and a right object APR on the right side of the asphalt finisher 100. Specifically, the left object APL includes a first left object APL1 and a second left object APL2, and the right object APR includes a first right object APR1 and a second right object APR2. The object AP may be an L-shaped side groove block, a rim stone block, a cutting step portion of an existing pavement body, or the like. The cutting step portion of the existing pavement body means a step portion that is formed when an old pavement body is cut and a new pavement body is laid and that is between a surface of a cut portion and a surface of an uncut portion. The object AP may be a feature that has almost no thickness, such as a line drawn on the ground, a tape attached to the ground, and a thread stretched along the ground. The information related to a feature includes, for example, the height of the feature, the color of the surface of the feature, the reflectance of the surface of the feature, or the like. For the sake of clarity, Fig. 1 omits showing the left object APL.

In the shown example, the object detection device 51 is a stereo camera configured to be capable of monitoring the predetermined range. The object detection device 51 may be a monocular camera, a LIDAR, a millimeter wave radar, a laser radar, a laser scanner, a distance image camera, a laser range finder, an ultrasound sensor, a combination thereof, or the like, which is configured to be capable of monitoring the predetermined range.

In addition, the stereo camera, which is the object detection device 51, is desirably configured to have an automatic exposure adjustment function. With the configuration, the object detection device 51 can acquire information related to a feature within the predetermined range, regardless of day or night, that is, without requiring special lighting.

In the shown example, the object detection device 51 includes a left object detection device 51L provided on the left side of the asphalt finisher 100 and a right object detection device 51R provided on the right side of the asphalt finisher 100.

The left object detection device 51L is configured to be capable of monitoring the ground on the left side of the asphalt finisher 100. In the shown example, the left object detection device 51L is a stereo camera that monitors a left monitoring range ZL (a range surrounded by a one-dot chain line in Fig. 2) on the ground on the left side of the asphalt finisher 100.

The right object detection device 51R is configured to be capable of monitoring the ground on the right side of the asphalt finisher 100. In the shown example, the right object detection device 51R is a stereo camera that monitors a right monitoring range ZR (a range surrounded by a one-dot chain line in Fig. 2) on the ground on the right side of the asphalt finisher 100.

The object detection device 51 may be attached to the asphalt finisher 100 via an attachment member 60. The attachment member 60 is a member used in order to attach the object detection device 51 to the asphalt finisher 100. In the shown example, the attachment member 60 includes a left attachment member 60L and a right attachment member 60R. In the example shown in Fig. 2, the left object detection device 51L is attached to a left front end portion of the tractor 1 via the left attachment member 60L, and the right object detection device 51R is attached to a right front end portion of the tractor 1 via the right attachment member 60R. The left object detection device 51L may be attached to another portion of the asphalt finisher 100, such as a left front end portion of the hopper 2, via the left attachment member 60L. Similarly, the right object detection device 51R may be attached to another portion of the asphalt finisher 100, such as a right front end portion of the hopper 2, via the right attachment member 60R.

In addition, the object detection device 51 may be configured to be capable of monitoring an expansion and contraction state of the rear screed 31. For example, the object detection device 51 may additionally include a stereo camera configured to be capable of monitoring an end portion of the left rear screed 31L and a stereo camera configured to be capable of monitoring an end portion of the right rear screed 31R. In this case, the object detection device 51 may be disposed at the screed 3. For example, the object detection device 51 may be disposed at the rear screed 31. In addition, in a case where the end portion leveling device is disposed at the end portion of the rear screed 31, the object detection device 51 may be disposed at the end portion leveling device.

In addition, the object detection device 51 is attached to the attachment member 60 to face vertically downward in the example shown in Fig. 2, but may be attached to the attachment member 60 to face another direction such as obliquely downward.

In addition, in the example shown in Fig. 2, the left attachment member 60L is configured by an expanding and contracting member TA that is capable of expanding and contracting in the width direction and a pivoting member SB that is pivotably connected to a distal end of the expanding and contracting member TA. A pivoting member SBa represented by a broken line in Fig. 2 indicates a state when the pivoting member SB has pivoted. The same applies to the right attachment member 60R.

As described above, the attachment member 60 is configured to be capable of moving a monitoring range of the object detection device 51 with the expanding and contracting member TA and the pivoting member SB. This is to enable response to a change in a pavement width or the like. In this case, the controller 50 may be configured to control the pivoting of the pivoting member SB such that the object detection device 51 follows the object AP or may be configured to control the expansion and contraction of the expanding and contracting member TA. Accordingly, the controller 50 can continuously include the object AP within the monitoring range of the object detection device 51 even when the position of the object AP changes in the vehicle width direction.

The attachment member 60 may include at least one of a sensor that detects an expansion and contraction amount of the expanding and contracting member TA and a sensor that detects a pivoting amount (pivoting angle) of the pivoting member SB.

At least one of the expanding and contracting member TA and the pivoting member SB may be omitted. For example, the attachment member 60 may be configured to be incapable of expanding and contracting and to be incapable of pivoting. That is, the attachment member 60 may be a rod-shaped member that is incapable of expanding and contracting and that is incapable of pivoting.

In addition, the object detection device 51 may be directly attached to the asphalt finisher 100 without via the attachment member 60.

In addition, the object detection device 51 may be configured to be one device that can simultaneously monitor the ground on the left side of the asphalt finisher 100 and the ground on the right side of the asphalt finisher 100. Specifically, the object detection device 51 may be configured to be one device that can simultaneously monitor the left object APL and the right object APR. In this case, the object detection device 51 may be attached to a front end central portion of an upper surface of the tractor 1.

In addition, a steering angle sensor configured to be capable of detecting a steering angle of the asphalt finisher 100, a screed expansion and contraction amount sensor configured to be capable of detecting an expansion and contraction amount of the rear screed 31, and the like may be attached to the asphalt finisher 100.

The vehicle-mounted display device 52 is configured to be capable of displaying information related to the asphalt finisher 100. In the shown example, the vehicle-mounted display device 52 is a liquid crystal display provided in front of a driver's seat 1S. However, the vehicle-mounted display device 52 may include a display device provided at at least one of a left end portion and a right end portion of the screed 3.

The steering device 53 is configured to be capable of steering the asphalt finisher 100. In the shown example, the steering device 53 is configured to expand and contract a front wheel steering cylinder provided close to a front axle. Specifically, the steering device 53 includes a steering electromagnetic control valve that controls the flow rate of a hydraulic oil flowing from the hydraulic pump to the front wheel steering cylinder and the flow rate of the hydraulic oil discharged from the front wheel steering cylinder. The steering electromagnetic control valve is configured to control the inflow and outflow of the hydraulic oil in the front wheel steering cylinder in accordance with the rotation of a steering wheel SH (handle), which is a manipulation device. The steering electromagnetic control valve may be configured to control the inflow and outflow of the hydraulic oil in the front wheel steering cylinder in response to an operation of an input switch which is a manipulation device different from the steering wheel SH, regardless of the movement of the steering wheel SH. In addition, the steering electromagnetic control valve may be configured to control the inflow and outflow of the hydraulic oil in the front wheel steering cylinder in accordance with a steering command from the controller 50, regardless of the rotation of the steering wheel SH. That is, the controller 50 may be configured to be capable of automatically steering the asphalt finisher 100 regardless of the presence or absence of an operation of the steering wheel SH by a driver.

In a case where the asphalt finisher 100 is a crawler type asphalt finisher, the steering device 53 is configured to control each of a pair of right and left crawlers. The crawler type asphalt finisher includes a left operation lever that is a manipulation device for operating the left crawler and a right operation lever that is a manipulation device for operating the right crawler, instead of the steering wheel SH.

Specifically, the steering device 53 includes a left steering electromagnetic control valve that controls the flow rate of a hydraulic oil flowing from the hydraulic pump to a left traveling hydraulic motor for rotating the left crawler and a right steering electromagnetic control valve that controls the flow rate of a hydraulic oil flowing from the hydraulic pump to a right traveling hydraulic motor for rotating the right crawler. In addition, the left steering electromagnetic control valve is configured to control the inflow and outflow of the hydraulic oil in the left traveling hydraulic motor in accordance with a manipulated variable (inclination angle) of the left operation lever. Similarly, the right steering electromagnetic control valve is configured to control the inflow and outflow of the hydraulic oil in the right traveling hydraulic motor in accordance with a manipulated variable (inclination angle) of the right operation lever. The left steering electromagnetic control valve may be configured to control the inflow and outflow of the hydraulic oil in the left traveling hydraulic motor in accordance with a steering command from the controller 50, regardless of the presence or absence of an operation of the left operation lever by the driver. Similarly, the right steering electromagnetic control valve may be configured to control the inflow and outflow of the hydraulic oil in the right traveling hydraulic motor in accordance with a steering command from the controller 50, regardless of the presence or absence of an operation of the right operation lever by the driver.

The screed expanding and contracting device 54 is configured to be capable of expanding and contracting the rear screed 31 in the vehicle width direction (Y-axis direction). In the shown example, the screed expanding and contracting device 54 is configured to expand and contract the screed expanding and contracting cylinder 7 provided in the screed 3. Specifically, the screed expanding and contracting device 54 includes a screed expanding and contracting electromagnetic control valve that controls the flow rate of a hydraulic oil flowing from the hydraulic pump to the screed expanding and contracting cylinder 7 and the flow rate of the hydraulic oil discharged from the screed expanding and contracting cylinder 7. The screed expanding and contracting electromagnetic control valve is configured to control the inflow and outflow of the hydraulic oil in the screed expanding and contracting cylinder 7 in response to an operation of an expansion and contraction button set (not shown), which is a manipulation device provided close to the vehicle-mounted display device 52. The expansion and contraction button set typically includes a left expansion and contraction button set for expanding and contracting the left rear screed 31L and a right expansion and contraction button set for expanding and contracting the right rear screed 31R. The screed expanding and contracting electromagnetic control valve may be configured to control the inflow and outflow of the hydraulic oil in the screed expanding and contracting cylinder 7 in accordance with an expansion and contraction command from the controller 50, regardless of the operation of the expansion and contraction button set. That is, the controller 50 may be configured to be capable of automatically expanding and contracting the rear screed 31 regardless of the presence or absence of the operation of the expansion and contraction button set by the driver.

Specifically, the screed expanding and contracting device 54 includes a left expansion and contraction electromagnetic control valve that controls the flow rate of a hydraulic oil flowing from the hydraulic pump to the left screed expanding and contracting cylinder 7L for expanding and contracting the left rear screed 31L and a right expansion and contraction electromagnetic control valve that controls the flow rate of a hydraulic oil flowing from the hydraulic pump to the right screed expanding and contracting cylinder 7R for expanding and contracting the right rear screed 31R. In addition, the left expansion and contraction electromagnetic control valve is configured to control the inflow and outflow of the hydraulic oil in the left screed expanding and contracting cylinder 7L in accordance with operation content of the left expansion and contraction button set. Similarly, the right expansion and contraction electromagnetic control valve is configured to control the inflow and outflow of the hydraulic oil in the right screed expanding and contracting cylinder 7R in accordance with operation content of the right expansion and contraction button set. The left expansion and contraction electromagnetic control valve may be configured to control the inflow and outflow of the hydraulic oil in the left screed expanding and contracting cylinder 7L in accordance with an expansion and contraction command from the controller 50, regardless of the presence or absence of an operation of the left expansion and contraction button set by the driver. Similarly, the right expansion and contraction electromagnetic control valve may be configured to control the inflow and outflow of the hydraulic oil in the right screed expanding and contracting cylinder 7R in accordance with an expansion and contraction command from the controller 50, regardless of the presence or absence of an operation of the right expansion and contraction button set by the driver.

The front monitoring device 55 is another example of the information acquisition device (space recognition device) that acquires information of surroundings of the asphalt finisher 100 and is configured to be capable of monitoring a space in front of the asphalt finisher 100.

In the shown example, the front monitoring device 55 is a monocular camera and is configured to be capable of acquiring information related to a feature that defines a boundary line of a front construction target range which is a construction target range positioned in front of the tractor 1. The front construction target range that is a part of a construction target range is, for example, a range that extends forward over a predetermined distance from a front end of the hopper 2. The predetermined distance is a value within a range of several meters to several hundred meters, may be a value stored in the non-volatile storage device or the like, may be a value input through an input device or the like, or may be a value dynamically calculated based on an output of the traveling speed sensor S1 or the like.

Specifically, the predetermined distance may be the same length as the total length (approximately 6 meters) of the asphalt finisher 100. This is to enable acquisition of information for realizing automatic steering beforehand.

However, the predetermined distance is preferably a length (12 meters or more) that is twice or more the total length of the asphalt finisher 100. This is to enable acquisition of information for realizing smooth automatic steering beforehand.

In addition, the predetermined distance may be a length (120 meters or more) that is 20 times or more the total length of the asphalt finisher 100. This is to acquire information related to the feature that defines the boundary line of the front construction target range as soon as possible.

The front monitoring device 55 may be a stereo camera, a LIDAR, a distance image sensor, or the like. In addition, the front monitoring device 55 may be the object detection device 51. In this case, the object detection device 51 may be configured to be capable of simultaneously monitoring the lower side and the front. For example, in a case where the object detection device 51 is a stereo camera, the object detection device 51 may be configured to be capable of simultaneously imaging the lower side and the front. In addition, the front monitoring device 55 may be configured such that the controller 50 can calculate a distance between a feature (object AP) that defines the boundary line of the front construction target range and the front-rear axis AX of the asphalt finisher 100 in the vehicle width direction (Y-axis direction). That is, the controller 50 may be configured to be capable of calculating the distance between the object AP that defines the boundary line of the front construction target range and the front-rear axis AX in the vehicle width direction (Y-axis direction) as the front monitoring device 55 executes various types of image processing on a captured image.

In the shown example, the front monitoring device 55 includes a left front monitoring device 55L attached to a front surface of the left object detection device 51L and a right front monitoring device 55R attached to a front surface of the right object detection device 51R. In addition, as shown in Figs. 1 and 2, the left front monitoring device 55L is disposed to be capable of acquiring information related to a feature (left object APL) that defines a boundary line of the front construction target range on the left side positioned in front of the hopper 2, and the right front monitoring device 55R is disposed to be capable of acquiring information related to a feature (right object APR) that defines a boundary line of the front construction target range on the right side positioned in front of the hopper 2.

A two-dot chain line shown in each of Figs. 1 and 2 represents a boundary of a monitoring range MZ of the front monitoring device 55. In addition, a two-dot chain line extending forward from the left front monitoring device 55L shown in Fig. 2 represents a boundary of a monitoring range of the left front monitoring device 55L (left monitoring range MZL), and a two-dot chain line extending forward from the right front monitoring device 55R shown in Fig. 2 represents a boundary of a monitoring range of the right front monitoring device 55R (right monitoring range MZR). The front monitoring device 55 may be configured to be capable of acquiring also information related to a feature that defines a boundary line of a construction target range that is positioned in front of the front wheel 6 and at the rear of the front end of the hopper 2. That is, the monitoring range MZ of the front monitoring device 55 may be set such that also the construction target range that is positioned in front of the front wheel 6 and at the rear of the front end of the hopper 2 can be monitored. Alternatively, the front monitoring device 55 may be configured to be capable of also acquiring information related to a feature that defines a boundary line of a construction target range that is positioned in front of the screed 3 and at the rear of the front end of the hopper **2.** That is, the monitoring range MZ of the front monitoring device 55 may be set such that also the construction target range that is positioned in front of the screed 3 and at the rear of the front end of the hopper 2 can be monitored.

In addition, the front monitoring device 55 may be configured such that the controller 50 can calculate a distance between the asphalt finisher 100 and a transport vehicle such as a dump truck positioned in front of the asphalt finisher 100. That is, the controller 50 may be configured to be capable of calculating the distance between the asphalt finisher 100 and the transport vehicle such as the dump truck positioned in front of the asphalt finisher 100 as the front monitoring device 55 executes various types of image processing on a captured image. In this case, the front monitoring device 55 that is a monocular camera may be configured to have a wider viewing angle such that the monitoring range MZ includes a central portion of the construction target range.

In addition, the front monitoring device 55 may be configured such that the controller 50 can detect an object positioned in the surroundings of the asphalt finisher 100. That is, the controller 50 may be configured to be capable of detecting an object such as a worker positioned in the surroundings of the asphalt finisher 100 as the front monitoring device 55 executes various types of image processing on a captured image. In this case, the controller 50 may be configured to be capable of distinguishing between a predetermined object (for example, a human) and an object other than the predetermined object.

The conveyor control device 56 is configured to control a feeding speed of the conveyor CV. In the shown example, the conveyor control device 56 is an electromagnetic valve that controls the flow rate of a hydraulic oil flowing into a hydraulic motor driving the conveyor CV. Specifically, the conveyor control device 56 increases and decreases a flow path area that is a sectional area of a pipeline which connects the hydraulic motor driving the conveyor CV and the hydraulic pump to each other in accordance with a control command from the controller 50. More specifically, the conveyor control device 56 increases the flow rate of the hydraulic oil flowing into the hydraulic motor driving the conveyor CV and increases the feeding speed of the conveyor CV by increasing the flow path area. Alternatively, the conveyor control device 56 decreases the flow rate of the hydraulic oil flowing into the hydraulic motor driving the conveyor CV and decreases the feeding speed of the conveyor CV by reducing the flow path area. In addition, the conveyor control device 56 is configured to control each of feeding speeds of the left conveyor CVL and the right conveyor CVR separately.

The screw control device 57 is configured to control the rotation speed of the screw SC. In the shown example, the screw control device 57 is an electromagnetic valve that controls the flow rate of a hydraulic oil flowing into a hydraulic motor driving the screw SC. Specifically, the screw control device 57 increases and decreases a flow path area which is a sectional area of a pipeline that connects the hydraulic motor driving the screw SC and the hydraulic pump to each other in accordance with a control command from the controller 50. More specifically, the screw control device 57 increases the flow rate of the hydraulic oil flowing into the hydraulic motor driving the screw SC and increases the rotation speed of the screw SC by increasing the flow path area. Alternatively, the screw control device 57 decreases the flow rate of the hydraulic oil flowing into the hydraulic motor driving the screw SC and decreases the rotation speed of the screw SC by reducing the flow path area. In addition, the screw control device 57 is configured to control each of rotation speeds of the left screw SCL and the right screw SCR separately.

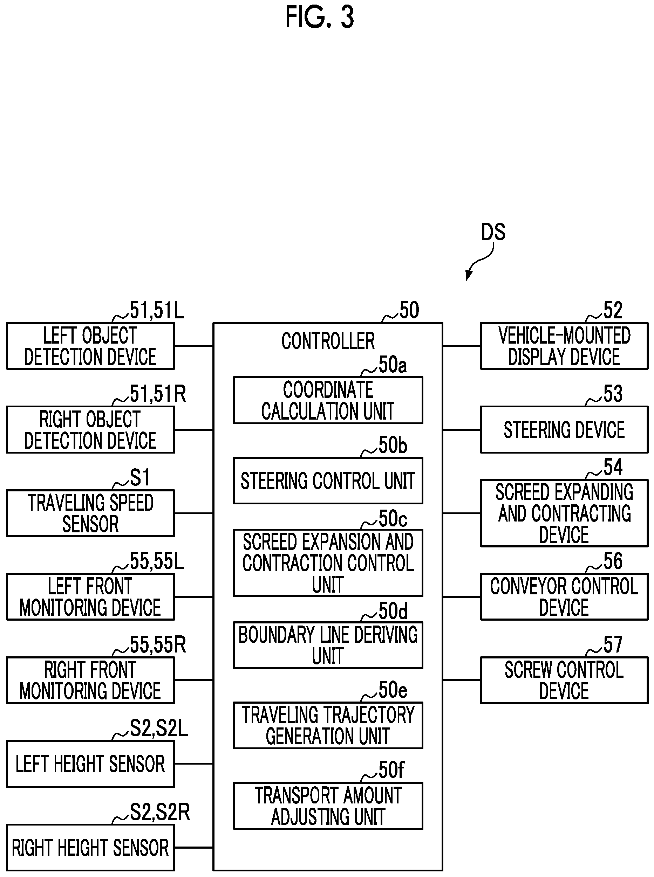

Next, a configuration example of a control system DS mounted on the asphalt finisher 100 will be described with reference to Fig. 3. Fig. 3 is a block diagram showing the configuration example of the control system DS.

The control system DS is mainly configured by the controller 50, the left object detection device 51L, the right object detection device 51R, the traveling speed sensor S1, the vehicle-mounted display device 52, the steering device 53, the screed expanding and contracting device 54, the front monitoring device 55, and the like.

In the example shown in Fig. 3, the controller 50 includes a coordinate calculation unit 50a, a steering control unit 50b, a screed expansion and contraction control unit 50c, a boundary line deriving unit 50d, a traveling trajectory generation unit 50e, and a transport amount adjusting unit 50f.

The coordinate calculation unit 50a is configured to calculate coordinates on the boundary line of the construction target range based on information related to a feature acquired by the object detection device 51. A guide line GD shown by a thick broken line of Fig. 2 is an example of the boundary line of the road which is the construction target and is an imaginary line representing a guide surface. In Fig. 2, the guide line GD includes a portion not derived at the present time point (a portion in front of the monitoring range of the object detection device 51). The guide surface is an imaginary surface recognized as a surface to match an end surface of a laid pavement body in the width direction. In the example shown in Fig. 2, the guide line GD includes a left guide line GDL that represents a left guide surface which is a surface to match a left end surface of the newly constructed pavement body NP and a right guide line GDR that represents a right guide surface which is a surface to match a right end surface of the newly constructed pavement body NP.

Specifically, the coordinate calculation unit 50a calculates coordinates on the guide line GD based on information related to the object AP acquired by the object detection device 51. More specifically, the coordinate calculation unit 50a calculates coordinates of a point VL configuring the left guide line GDL based on information related to the left object APL acquired by the left object detection device 51L and calculates coordinates of a point VR configuring the right guide line GDR based on information related to the right object APR acquired by the right object detection device 51R.

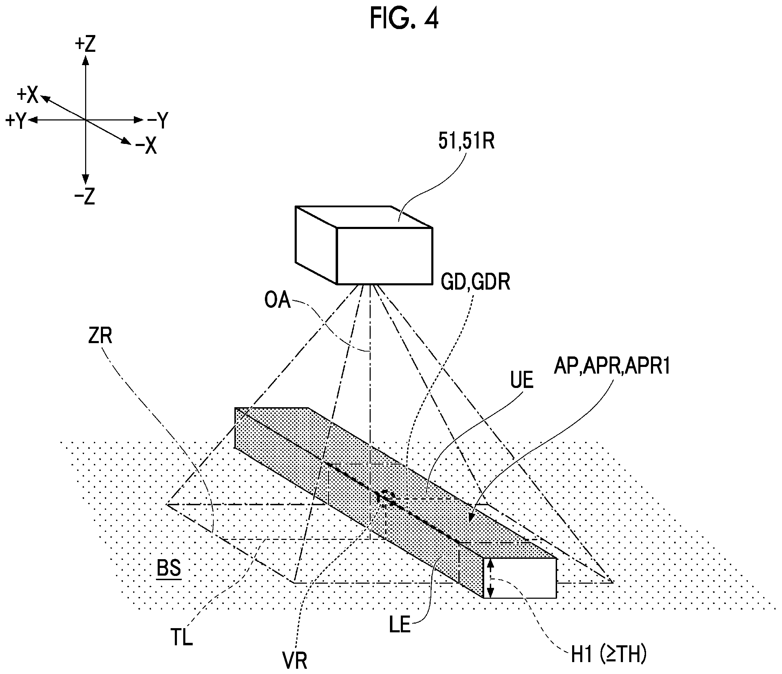

For example, as shown in Fig. 4, the coordinate calculation unit 50a generates the right guide line GDR using an image recognition technique such that an imaginary line representing an angle (edge) between a left end surface LE and an upper end surface UE of the right object APR which is in the right monitoring range ZR of the right object detection device 51R is the right guide line GDR. Then, the coordinate calculation unit 50a calculates coordinates of an intersection point of the generated right guide line GDR and a cross-sectional line TL as coordinates of the point VR. In the example of Fig. 4, the cross-sectional line TL is a straight line that is parallel to the vehicle width direction (Y-axis direction) and that intersects a center line (optical axis OA) of the right object detection device 51R. Fig. 4 is a schematic perspective view of a paving mold which is the right object APR viewed from the rear of the asphalt finisher 100 and schematically shows a positional relationship between the right object detection device 51R and the right object APR.

For example, the coordinate calculation unit 50a uses a distance image related to the right monitoring range ZR that is generated based on an output of the stereo camera which is the right object detection device 51R and calculates coordinates of a pixel including the intersection point of the right guide line GDR and the cross-sectional line TL as coordinates of the point VR. The distance image is a data set in which each pixel value of a pixel group which is a two-dimensional array is represented by a distance from the right object detection device 51R.

The coordinates of the point VR are one set of coordinates in a predetermined coordinate system. The predetermined coordinate system is, for example, the world geodetic system. The world geodetic system is a three-dimensional orthogonal XYZ coordinate system in which the origin is at the center of gravity of the earth, the X-axis is in a direction of an intersection point of the Greenwich meridian and the equator, the Y-axis is in a direction of 90 degrees east longitude, and the Z-axis is in a direction of the North Pole. However, the predetermined coordinate system may be a local coordinate system of which the origin is a predetermined point on the asphalt finisher 100. That is, the predetermined coordinate system may be a local coordinate system of which the origin moves as the asphalt finisher 100 moves. Specifically, the predetermined coordinate system may be, for example, a three-dimensional orthogonal coordinate system of which the origin is a center point of the asphalt finisher 100. In this case, the center point of the asphalt finisher 100 may be, for example, a center point of the tractor 1 or may be an intersection point of the axle of the rear wheel 5 and the front-rear axis AX (see Fig. 2). In addition, the predetermined coordinate system may be a local coordinate system of which the origin does not move even when the asphalt finisher 100 moves. In this case, the local coordinate system may be a coordinate system of which the origin is the center point of the asphalt finisher 100 when construction starts. In addition, the predetermined coordinate system may be a plane orthogonal coordinate system such as a surveying plane coordinate system used in a total station or the like.

For example, the coordinate calculation unit 50a may be configured to extract a pixel having a difference from a left pixel value that is equal to or larger than a predetermined threshold, from pixels configuring a distance image, and to derive a single line that is the guide line GD from disposition of a plurality of extracted pixels. The single line is a straight line, a curved line, or a combination thereof. As a technique of deriving the single line, any image recognition technique such as the Hough transform can be used.

The coordinate calculation unit 50a may eliminate effects of a portion where the positions of the extracted pixels vary by executing averaging processing. Specifically, in a portion where two paving molds are in contact with each other or an image portion corresponding to an irregular portion of the cutting step portion or the like, such variations occur in some cases.

The predetermined threshold is a threshold TH related to the height of a paving mold in this example. In this case, as shown in Fig. 4, the coordinate calculation unit 50a can generate an imaginary line representing an upper left edge of the right object APR that is a paving mold having a height H1 which is equal to or larger than the threshold TH as the right guide line GDR.

The threshold TH may be configured to be set beforehand in accordance with the height of a paving mold that is actually used. The use of the threshold TH set in accordance with the height of the paving mold that is actually used enables generation of a guide line based on an edge of a thin paving mold. In addition, the use of the threshold TH set in accordance with the height of the paving mold that is actually used can suppress that the coordinate calculation unit 50a mistakenly generates a guide line based on the shape (edge) of a feature other than the paving mold.

After then, as shown in Fig. 4, the coordinate calculation unit 50a calculates the coordinates of the intersection point of the generated right guide line GDR and the cross-sectional line TL as coordinates of the point VR.

Although the description made above relates to processing of calculating the coordinates of the point VR on the right guide line GDR from a distance image related to the right monitoring range ZR, the same applies to processing of calculating coordinates of the point VL on the left guide line GDL from a distance image related to the left monitoring range ZL.

In addition, in a case where the object detection device 51 is a monocular camera, the "distance image" in the description above is replaced with an "image". In this case, the "pixel value" is represented by color information or the like, not by a distance. The color information may be brightness.

In this manner, the coordinate calculation unit 50a intermittently calculates and stores coordinates of each of the point VL and the point VR. In the shown example, the coordinate calculation unit 50a is configured to calculate and store the coordinates of each of the point VL and the point VR each time the asphalt finisher 100 advances by a predetermined distance (for example, 15 cm). The coordinate calculation unit 50a may be configured to calculate and store the coordinates of each of the point VL and the point VR each time a predetermined time elapses.

Fig. 1 shows a state where the coordinate calculation unit 50a intermittently calculates and stores the coordinates of the point VL. In Fig. 1, a point VL0 corresponds to the point VL derived by the coordinate calculation unit 50a based on an output of the left object detection device 51L at the present time point. In addition, a point VL1 corresponds to the point VL derived by the coordinate calculation unit 50a based on an output of the left object detection device 51L at one time point in the past. The same applies to a point VL2 to a point VL4. In addition, a point VL11 corresponds to the point VL to be derived by the coordinate calculation unit 50a based on an output of the left object detection device 51L at one time point in the future. The same applies to a point VL12 to a point VL14. That is, at the present time point, the coordinate calculation unit 50a has already calculated and stored a coordinate value of each of the point VL0 and the point VL1 to the point VL4.

Similar to Fig. 1, Fig. 2 also shows a state where the coordinate calculation unit 50a intermittently calculates and stores coordinates of each of the point VL and the point VR. In Fig. 2, a point VR0 corresponds to the point VR derived by the coordinate calculation unit 50a based on an output of the right object detection device 51R at the present time point. The same applies to the point VL0. In addition, a point VR1 corresponds to the point VR derived by the coordinate calculation unit 50a based on an output of the right object detection device 51R at one time point in the past. The same applies to a point VR2 to a point VR4. In addition, the point VL1 corresponds to the point VL derived by the coordinate calculation unit 50a based on the output of the left object detection device 51L at one time point in the past. The same applies to the point VL2 to the point VL4. In addition, a point VR11 corresponds to the point VR to be derived by the coordinate calculation unit 50a based on an output of the right object detection device 51R at one time point in the future. The same applies to a point VR12 to a point VR14. In addition, the point VL11 corresponds to the point VL to be derived by the coordinate calculation unit 50a based on the output of the left object detection device 51L at one time point in the future. The same applies to the point VL11 to the point VL14.

The steering control unit 50b is configured to be capable of automatically steering the asphalt finisher 100 regardless of an operation of a manipulation device such as a traveling speed dial, the steering wheel SH, and an input switch. The steering control unit 50b may be configured to control the traveling speed of the asphalt finisher 100 when automatically steering the asphalt finisher 100. In addition, the steering control unit 50b may be omitted.

The screed expansion and contraction control unit 50c is configured to be capable of automatically expanding and contracting the right and left rear screeds 31 that can expand and contract regardless of an operation of a manipulation device such as the expansion and contraction button set. The screed expansion and contraction control unit 50c may be configured to be capable of automatically expanding and contracting the rear screed 31 depending on the traveling speed and the steering angle of the asphalt finisher 100 when automatically steering the asphalt finisher 100.

In the shown example, the screed expansion and contraction control unit 50c generates an expansion and contraction command with respect to the screed expanding and contracting cylinder 7 based on coordinates on a boundary line calculated and stored by the coordinate calculation unit 50a. The expansion and contraction command is, for example, a command related to an expansion and contraction speed, a command related to an expansion and contraction amount, a combination thereof, or the like.

Specifically, the screed expansion and contraction control unit 50c executes feed-forward control of the expansion and contraction amount of the rear screed 31. More specifically, the screed expansion and contraction control unit 50c expands and contracts the left screed expanding and contracting cylinder 7L such that coordinates of a predetermined part (for example, a left front end point) of the left rear screed 31L match left target coordinates. The left target coordinates are an example of target coordinates and are, for example, coordinates of the point VL at a closest position in front of the predetermined part (for example, the left front end point) of the left rear screed 31L. In addition, the screed expansion and contraction control unit 50c expands and contracts the right screed expanding and contracting cylinder 7R such that coordinates of a predetermined part (for example, a right front end point) of the right rear screed 31R match right target coordinates. The right target coordinates are another example of the target coordinates and are, for example, coordinates of the point VR at a closest position in front of the predetermined part (for example, the right front end point) of the right rear screed 31R. In addition, the screed expansion and contraction control unit 50c may be configured to determine an expansion and contraction speed depending on the traveling speed of the asphalt finisher 100 detected by the traveling speed sensor S1.

Similar to the coordinates of the point VL and the point VR, the coordinates of the predetermined part of the rear screed 31, such as the coordinates of the left front end point of the left rear screed 31L and the coordinates of the right front end point of the right rear screed 31R, can be calculated by the coordinate calculation unit 50a. Specifically, the coordinate calculation unit 50a can calculate a relative position of the object detection device 51 with respect to the position of a reference point such as the center point of the tractor 1 based on the expansion and contraction amount of the expanding and contracting member TA performing positioning of the object detection device 51 or the like. Similarly, the coordinate calculation unit 50a can calculate a relative position of each of the left front end point of the left rear screed 31L and the right front end point of the right rear screed 31R with respect to the position of the reference point based on the expansion and contraction amount of the rear screed 31 or the like. In addition, the coordinate calculation unit 50a can calculate a relative position of the reference point at a second time point with respect to the position of the reference point at a first time point based on outputs of the traveling speed sensor S1, the steering angle sensor, and the like. For this reason, the coordinate calculation unit 50a can calculate a relative position of each of the point VL, the point VR, the left front end point of the left rear screed 31L, the right front end point of the right rear screed 31R at another time point with respect to the position of the reference point at the first time point.

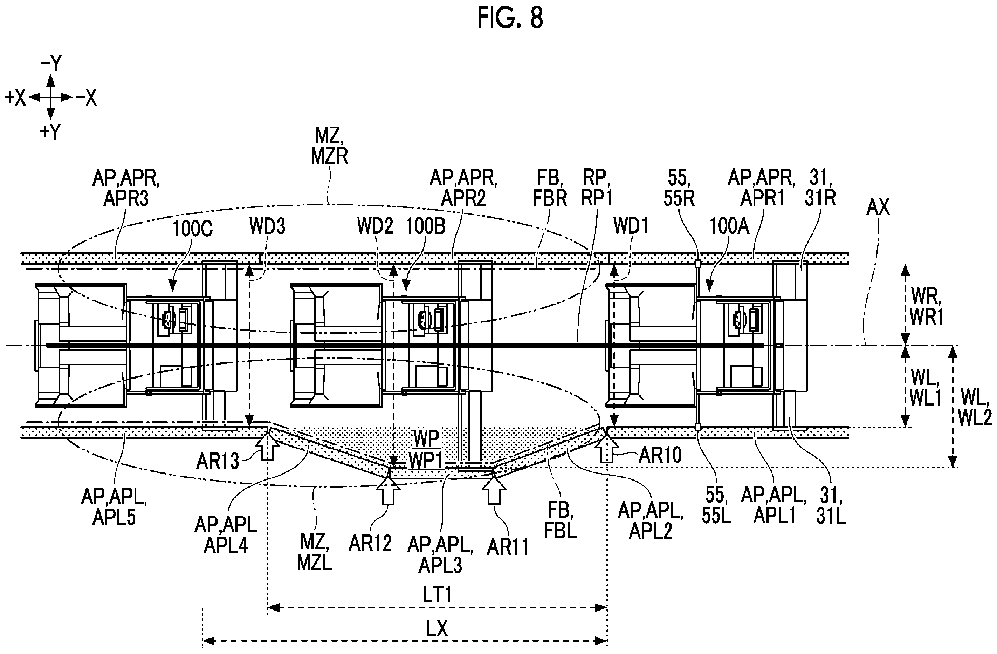

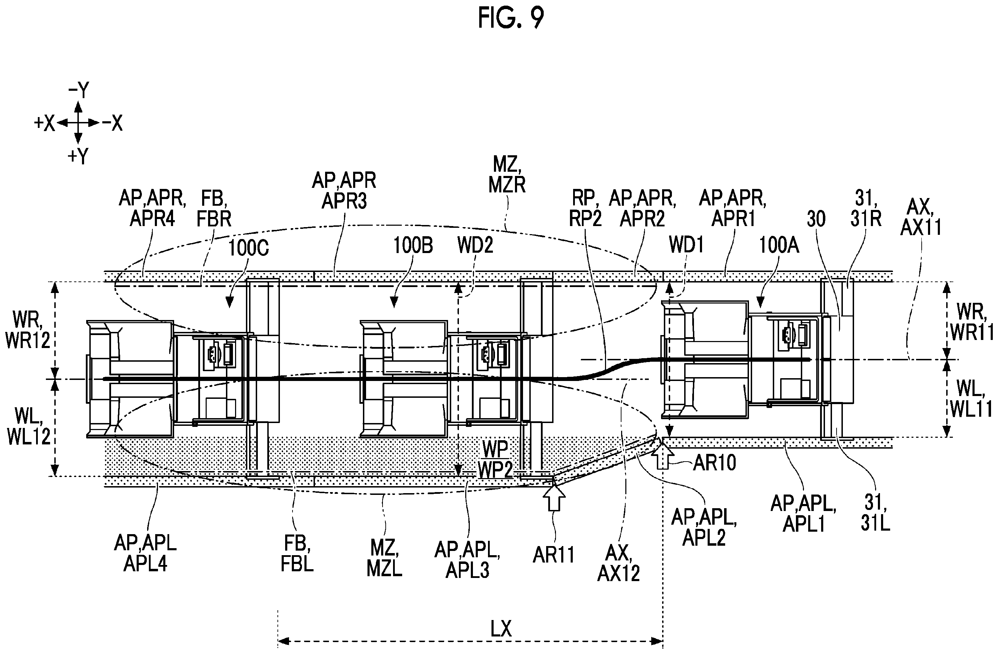

The boundary line deriving unit 50d is configured to derive information related to a boundary line of a construction target range. The information related to the boundary line is the position of the boundary line, the extending direction of the boundary line, coordinates of each of points configuring the boundary line, or the like. In the shown example, the boundary line deriving unit 50d is configured to derive a boundary line of a front construction target range positioned in front of the asphalt finisher 100 as a front boundary line FB (see Figs. 8 and 9) based on information related to a feature acquired by the front monitoring device 55. Specifically, the front boundary line FB includes a left front boundary line FBL (see Figs. 8 and 9) that corresponds to the boundary line of the front construction target range on the left side and a right front boundary line FBR (see Figs. 8 and 9) that corresponds to the boundary line of the front construction target range on the right side. In addition, any image recognition technique such as the Hough transform can be used as a technique of deriving a single line from an image.

The traveling trajectory generation unit 50e is configured to be capable of generating a traveling trajectory RP (see Figs. 8 and 9) of the asphalt finisher 100. In the shown example, the traveling trajectory RP is a trajectory followed by the center point of the asphalt finisher 100. Specifically, the traveling trajectory generation unit 50e is configured to generate the traveling trajectory RP based on the left front boundary line FBL and the right front boundary line FBR. For example, the traveling trajectory generation unit 50e generates a line that bisects the front construction target range in an extending direction of the front construction target range as the traveling trajectory RP. In this case, a distance between the left front boundary line FBL and the traveling trajectory RP in a width direction of the front construction target range and a distance between the right front boundary line FBR and the traveling trajectory RP in the width direction of the front construction target range are the same.

However, in a case where a predetermined condition is satisfied, the traveling trajectory RP may be generated so as to deviate from the line that bisects the front construction target range in the extending direction of the front construction target range. For example, in a case where the width of the front construction target range partially extends, that is, in a case where the front construction target range includes a widening portion WP (see Fig. 8), a line that bisects the front construction target range (not including the widening portion WP) may be generated as the traveling trajectory RP assuming that the widening portion WP does not exist when a length LT1 of the widening portion WP in the extending direction of the front construction target range is equal to or smaller than a distance LX.

In addition, the steering control unit 50b controls a steering angle by controlling the steering device 53 such that the center point of the asphalt finisher 100 moves along the traveling trajectory RP generated by the traveling trajectory generation unit 50e. In this case, the steering control unit 50b may forcibly reduce the traveling speed of the asphalt finisher 100 as necessary.

In addition, the traveling trajectory generation unit 50e may be configured to generate the traveling trajectory RP of the asphalt finisher 100 without using coordinates calculated by the coordinate calculation unit 50a.

The transport amount adjusting unit 50f is configured to adjust an amount by which the transport device transports the paving material PV. In the shown example, the transport amount adjusting unit 50f is configured to set a target transport speed that is a target value of a speed at which the transport device transports the paving material PV such that a paving material height does not change even in a case where a protruding amount of the rear screed 31 has changed. The paving material height represents a holding amount that is the amount of the paving material PV spread in front of the mold board 42 by the screw SC and increases as the holding amount increases when the protruding amount of the rear screed 31 is constant.

In the shown example, the protruding amount of the rear screed 31 is a length between the front-rear axis AX and the end portion of the rear screed 31 in the vehicle width direction. Specifically, a protruding amount WL (see Figs. 8 and 9) of the left rear screed 31L is a distance between the front-rear axis AX and a left end portion of the left rear screed 31L in the vehicle width direction, and a protruding amount WR (see Figs. 8 and 9) of the right rear screed 31R is a distance between the front-rear axis AX and a right end portion of the right rear screed 31R in the vehicle width direction. In a case where the traveling trajectory RP is generated, the protruding amount of the rear screed 31 may be a length between the traveling trajectory RP and the end portion of the rear screed 31 in the vehicle width direction.

Specifically, the transport amount adjusting unit 50f is configured to control the amount by which the transport device transports the paving material PV by setting a target transport speed based on information related to a boundary line (front boundary line FB) of a construction target range in front of the screed 3 which is derived by the boundary line deriving unit 50d.

More specifically, the transport amount adjusting unit 50f derives the protruding amount WL of the left rear screed 31L and the protruding amount WR of the right rear screed 31R after a predetermined time elapses based on the information related to the boundary line (front boundary line FB) of the construction target range in front of the screed 3. The predetermined time may be a time registered in advance or may be a time dynamically set depending on the traveling speed of the asphalt finisher 100 or the like. Then, the transport amount adjusting unit 50f sets a target transport speed based on the derived protruding amount.

In the shown example, the transport amount adjusting unit 50f increases a left target transport speed of the left transport device in a case where the protruding amount WL of the left rear screed 31L increases after the predetermined time elapses and decreases the left target transport speed of the left transport device in a case where the protruding amount WL of the left rear screed 31L decreases after the predetermined time elapses. Increasing the left target transport speed means, for example, increasing the feeding speed of the left conveyor CVL and increasing the rotation speed of the left screw SCL. In addition, decreasing the left target transport speed means, for example, decreasing the feeding speed of the left conveyor CVL and decreasing the rotation speed of the left screw SCL.

Similarly, the transport amount adjusting unit 50f increases a right target transport speed of the right transport device in a case where the protruding amount WR of the right rear screed 31R increases after the predetermined time elapses and decreases the right target transport speed of the right transport device in a case where the protruding amount WR of the right rear screed 31R decreases after the predetermined time elapses. Increasing the right target transport speed means, for example, increasing the feeding speed of the right conveyor CVR and increasing the rotation speed of the right screw SCR. In addition, decreasing the right target transport speed means, for example, decreasing the feeding speed of the right conveyor CVR and decreasing the rotation speed of the right screw SCR.

In addition, the transport amount adjusting unit 50f may be configured to adjust the amount by which the transport device transports the paving material PV without using coordinates calculated by the coordinate calculation unit 50a.

The controller 50 generates various types of control commands based on the target transport speeds (the left target transport speed and the right target transport speed) set by the transport amount adjusting unit 50f and outputs the various types of generated control commands to various types of control devices. Specifically, the controller 50 generates, based on the left target transport speed, a control command related to the feeding speed of the left conveyor CVL (left conveyor control command) and a control command related to the rotation speed of the left screw SCL (left screw control command), transmits the left conveyor control command to the conveyor control device 56, and transmits the left screw control command to the screw control device 57. Similarly, the controller 50 generates, based on the right target transport speed, a control command related to the feeding speed of the right conveyor CVR (right conveyor control command) and a control command related to the rotation speed of the right screw SCR (right screw control command), transmits the right conveyor control command to the conveyor control device 56, and transmits the right screw control command to the screw control device 57. In addition, the controller 50 may forcibly reduce the traveling speed of the asphalt finisher 100 as necessary.

The conveyor control device 56 controls the feeding speed of the left conveyor CVL based on the left conveyor control command and controls the feeding speed of the right conveyor CVR based on the right conveyor control command. Similarly, the screw control device 57 controls the rotation speed of the left screw SCL based on the left screw control command and controls the rotation speed of the right screw SCR based on the right screw control command.

The controller 50 may be configured to use an output of the height sensor S2 when generating various types of control commands based on a target transport speed. For example, the controller 50 may set a target paving material height based on the target transport speed and adjust at least one of the conveyor control commands (the left conveyor control command and the right conveyor control command) and the screw control commands (the left screw control command and the right screw control command) such that the actual height of a paving material detected by the height sensor S2 is the target paving material height. That is, the controller 50 may adjust the paving material height by feeding back the output of the height sensor S2.

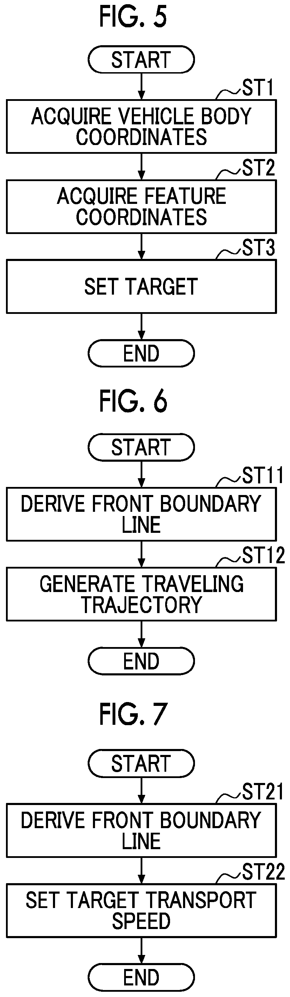

Next, processing in which the controller 50 sets a target when expanding and contracting the rear screed 31 (hereinafter, referred to as a "target setting processing") will be described with reference to Fig. 5. Fig. 5 is a flowchart showing an example of a flow of the target setting processing. The controller 50 repeatedly executes the target setting processing in a predetermined control cycle.

First, the controller 50 acquires vehicle body coordinates (Step ST1). The vehicle body coordinates mean coordinates of a predetermined part of the asphalt finisher 100 and includes coordinates of a predetermined part of the rear screed 31 such as coordinates of the left front end point of the left rear screed 31L and coordinates of the right front end point of the right rear screed 31R.

Specifically, the controller 50 stores the center point of the asphalt finisher 100 at the first time point such as a construction start time point as a reference point.

Then, during construction, the controller 50 can derive a relative position of the center point of the asphalt finisher 100 and a direction of the asphalt finisher 100 at any time point such as the present time point based on outputs of the traveling speed sensor S1 and the steering angle sensor. The relative position of the center point means a relative position of the center point with respect to the reference point. The same applies to the following description.

In the shown example, the controller 50 can derive coordinates of a turning center based on the output of the steering angle sensor. Then, the controller 50 can derive the relative position of the center point of the asphalt finisher 100 and the direction of the asphalt finisher 100 at any time point such as the present time point based on the coordinates of the turning center and the output of the traveling speed sensor S1. The controller 50 may be configured to derive a moving distance, a change in a posture, or the like based on an output of an inertial measurement unit (IMU), a global navigation satellite system (GNSS), a surveying instrument, or the like (not shown) mounted on the asphalt finisher 100. Further, the controller 50 can derive a relative position of the predetermined part of the asphalt finisher 100 based on the relative position of the center point of the asphalt finisher 100 and the direction of the asphalt finisher 100 at any time point, a known dimension of each of members configuring the asphalt finisher 100, or the like. The relative position of the predetermined part of the asphalt finisher 100 includes a relative position of the left object detection device 51L and a relative position of the right object detection device 51R.

After acquiring the vehicle body coordinates, the controller 50 acquires feature coordinates (Step ST2). The feature coordinates mean coordinates of a feature such as the object AP and includes coordinates on a boundary line of a road, which is a construction target, on the left side, coordinates on a boundary line of the road, which is the construction target, on the right side, and the like.

Specifically, the controller 50 can calculate coordinates of the point VL that are coordinates on the boundary line of the road, which is the construction target, on the left side and coordinates of the point VR0 that are coordinates on the boundary line of the road, which is the construction target, on the right side based on the relative position of the center point of the asphalt finisher 100 and the direction of the asphalt finisher 100 at any time point and an output of the object detection device 51 at any time point.

After acquiring the vehicle body coordinates and the feature coordinates, the controller 50 sets a target (Step ST3). In the shown example, the controller 50 calculates a target value of an expansion and contraction amount of the rear screed 31.

Specifically, the controller 50 derives a distance between the point VL that is at a closest position in front of a predetermined part (for example, the left front end point) of the left rear screed 31L and the front-rear axis AX that is a center axis of the asphalt finisher 100 (hereinafter, referred to as a "first distance") based on the relative position of the center point of the asphalt finisher 100 and the direction of the asphalt finisher 100 at the present time point. In addition, the controller 50 derives a distance between the predetermined part (for example, the left front end point) of the left rear screed 31L and the front-rear axis AX of the asphalt finisher 100 (hereinafter, referred to as a "second distance") based on the relative position of the center point of the asphalt finisher 100 and the direction of the asphalt finisher 100 at the present time point. Then, the controller 50 sets a difference between the first distance and the second distance as a target expansion and contraction amount. Specifically, the controller 50 sets the difference between the first distance and the second distance as a target expansion amount in a case where the first distance is larger than the second distance and sets the difference between the first distance and the second distance as a target contraction amount in a case where the first distance is smaller than the second distance.

In addition, the controller 50 determines an expansion and contraction speed based on a distance between the predetermined part (for example, the left front end point) of the left rear screed 31L and the point VL that is at a closest position in front thereof in a traveling direction (hereinafter, referred to as a "third distance"). Specifically, the controller 50 increases the expansion and contraction speed as the third distance increases when the target expansion and contraction amount is the same.

Alternatively, the controller 50 may estimate the position of the predetermined part (for example, the left front end point) of the left rear screed 31L after a predetermined time (for example, 1 second later) and derive a line segment that connects the closest point VL in front of the position of the predetermined part after the predetermined time and the closest point VL at the rear thereof to each other. Then, the controller 50 may use a distance between an interpolation point on the line segment (a point interpolating two points VL) and the front-rear axis AX as the first distance.

With the configuration, since the controller 50 can identify the position of the boundary line in front of the screed 3, the rear screed 31 can be expanded and contracted at an appropriate timing without excess or deficiency. For this reason, since the controller 50 can suppress or prevent the expansion and contraction of the rear screed 31 from being delayed in a case where a construction width changes, construction accuracy can be improved.

With the configuration described above, the screed expansion and contraction control unit 50c can expand and contract the left rear screed 31L such that the coordinates of the left front end point of the left rear screed 31L match coordinates on the guide line GD when the asphalt finisher 100 has advanced by a predetermined distance. That is, the screed expansion and contraction control unit 50c can control the expansion and contraction amount of the left rear screed 31L such that also a distance between the point VL and the left front end point of the left rear screed 31L in the vehicle width direction becomes zero when a distance between the point VL and the left front end point of the left rear screed 31L in the traveling direction at any time point becomes zero.

Similarly, the screed expansion and contraction control unit 50c can expand and contract the right rear screed 31R such that the coordinates of the right front end point of the right rear screed 31R match coordinates of the nearest point VR in front thereof when the asphalt finisher 100 has advanced by a predetermined distance. That is, the screed expansion and contraction control unit 50c can control the expansion and contraction amount of the right rear screed 31R such that also a distance between the point VR and the right front end point of the right rear screed 31R in the vehicle width direction becomes zero when a distance between the point VR and the right front end point of the right rear screed 31R in the traveling direction at any time point becomes zero.

Next, processing in which the controller 50 generates a traveling trajectory (hereinafter, referred to as "traveling trajectory generation processing") will be described with reference to Fig. 6. Fig. 6 is a flowchart showing an example of a flow of the traveling trajectory generation processing. In the shown example, the controller 50 repeatedly executes the processing in a predetermined control cycle while the asphalt finisher 100 advances.

First, the controller 50 derives a front boundary line (Step ST11). In the present embodiment, the boundary line deriving unit 50d of the controller 50 derives the front boundary line FB that is the boundary line of the front construction target range based on an output of the front monitoring device 55 that is an example of the information acquisition device (space recognition device). Specifically, the boundary line deriving unit 50d derives the left front boundary line FBL that is the boundary line of the front construction target range on the left side based on an output of the left front monitoring device 55L and derives the right front boundary line FBR that is the boundary line of the front construction target range on the right side based on an output of the right front monitoring device 55R.

After then, the traveling trajectory generation unit 50e of the controller 50 generates the traveling trajectory RP (Step ST12). In the present embodiment, the traveling trajectory generation unit 50e generates the traveling trajectory RP based on information related to the front boundary line FB derived by the boundary line deriving unit 50d. Specifically, the traveling trajectory generation unit 50e generates a line that bisects the front construction target range in the extending direction of the front construction target range as the traveling trajectory RP.

The controller 50 may be configured to support the steering of the asphalt finisher 100 using the generated traveling trajectory RP. For example, the controller 50 may automatically control the traveling direction of the asphalt finisher 100 such that the center point of the asphalt finisher 100 moves along the traveling trajectory RP. Alternatively, the controller 50 may be configured to notify the operator of the asphalt finisher 100 of a direction in which the asphalt finisher 100 is to travel in advance. For example, the controller 50 may output a voice message "please move 30 centimeters to the right" toward the operator of the asphalt finisher 100 such that the center point of the asphalt finisher 100 moves along the traveling trajectory RP. In this case, the operator of the asphalt finisher 100 can move the center point of the asphalt finisher 100 along the traveling trajectory RP only by operating the steering wheel SH in accordance with the voice message.

Next, processing in which the controller 50 adjusts the amount by which the transport device transports the paving material PV (hereinafter, referred to as "transport amount adjusting processing") will be described with reference to Fig. 7. Fig. 7 is a flowchart showing an example of a flow of the transport amount adjusting processing. In the shown example, the controller 50 repeatedly executes the processing in a predetermined control cycle while the asphalt finisher 100 advances. The controller 50 may be configured to simultaneously execute the traveling trajectory generation processing and the transport amount adjusting processing in parallel or may be configured to independently execute only any one of the traveling trajectory generation processing and the transport amount adjusting processing.

First, the controller 50 derives a front boundary line (Step ST21). In the present embodiment, the boundary line deriving unit 50d of the controller 50 derives the front boundary line FB that is the boundary line of the front construction target range based on the output of the front monitoring device 55 that is an example of the information acquisition device (space recognition device). Specifically, the boundary line deriving unit 50d derives the left front boundary line FBL that is the boundary line of the front construction target range on the left side based on the output of the left front monitoring device 55L and derives the right front boundary line FBR that is the boundary line of the front construction target range on the right side based on the output of the right front monitoring device 55R.

After then, the transport amount adjusting unit 50f of the controller 50 sets a target transport speed (Step ST22). In the present embodiment, the transport amount adjusting unit 50f sets the target transport speed based on the information related to the front boundary line FB derived by the boundary line deriving unit 50d.

Specifically, the transport amount adjusting unit 50f derives the protruding amount of the rear screed 31 after a predetermined time elapses based on the information related to the front boundary line FB derived by the boundary line deriving unit 50d. More specifically, the transport amount adjusting unit 50f derives a distance between the left front boundary line FBL and the front-rear axis AX after a predetermined time elapses as the protruding amount of the left rear screed 31L after the predetermined time elapses. In addition, the transport amount adjusting unit 50f derives a distance between the right front boundary line FBR and the front-rear axis AX after a predetermined time elapses as the protruding amount of the right rear screed 31R after the predetermined time elapses.

After then, the transport amount adjusting unit 50f sets the target transport speed based on the protruding amount of the rear screed 31. More specifically, the transport amount adjusting unit 50f sets a left target transport speed based on the protruding amount of the left rear screed 31L and sets a right target transport speed based on the protruding amount of the right rear screed 31R.

The transport amount adjusting unit 50f sets the target transport speed such that the target transport speed increases as the protruding amount of the rear screed 31 increases, that is, such that the amount by which the transport device transports the paving material PV increases.

The transport amount adjusting unit 50f may adjust the set target transport speed based on the output of the traveling speed sensor S1. Specifically, the transport amount adjusting unit 50f may adjust the target transport speed such that the target transport speed increases as the traveling speed of the asphalt finisher 100 increases.

In addition, the transport amount adjusting unit 50f may adjust the set target transport speed based on a set value of a construction thickness (a target thickness of the newly constructed pavement body NP). Specifically, the transport amount adjusting unit 50f may adjust the target transport speed such that the target transport speed increases as the construction thickness increases.

In addition, the transport amount adjusting unit 50f may adjust the set target transport speed based on the output of the steering angle sensor. Specifically, the transport amount adjusting unit 50f may adjust each of the left target transport speed and the right target transport speed such that the left target transport speed decreases and the right target transport speed increases as a left steering angle increases. In addition, the transport amount adjusting unit 50f may adjust each of the left target transport speed and the right target transport speed such that the right target transport speed decreases and the left target transport speed increases as a right steering angle increases.

Next, an example of the traveling trajectory RP generated by the controller 50 will be described with reference to Figs. 8 and 9. Figs. 8 and 9 are top views of a construction site. Specifically, Fig. 8 is a top view of a construction site including a front construction target range (road) that has a short widening portion WP1. Fig. 9 is a top view of a construction site including a front construction target range (road) that has a long widening portion WP2. In Figs. 8 and 9, the monitoring range MZ of the front monitoring device 55 is represented by a two-dot chain line, and the front boundary line FB which is the boundary line of the front construction target range is represented by a one-dot chain line. In addition, in Figs. 8 and 9, the position of the asphalt finisher 100 at the present time point is represented by a figure 100A, the position of the asphalt finisher 100 at the first time point after a predetermined time has elapsed from the present time point is represented by a figure 100B, and the position of the asphalt finisher 100 at the second time point after a predetermined time has elapsed from the first time point is represented by a figure 100C. In addition, in Figs. 8 and 9, for the sake of clarity, a coarse dot pattern is attached to the object AP (paving mold) that is a feature which defines the boundary line of the front construction target range, and a fine dot pattern is attached to the widening portion WP. In addition, in Figs. 8 and 9, for the sake of clarity, the front boundary line FB is drawn on an inner side of the actual position in the vehicle width direction. In addition, in Fig. 8, the object AP is configured by the left object APL including the first left object APL1 to a fifth left object APL5 and the right object APR including the first right object APR1 to a third left object APR3. In Fig. 9, the object AP is configured by the left object APL including the first left object APL1 to a fourth left object APL4 and the right object APR including the first right object APR1 to a fourth right object APR4.

In the construction site shown in Fig. 8, at the present time point, the front construction target range includes the widening portion WP1 on the left side (+Y side) in the traveling direction. The widening portion WP1 is formed to extend over the length LT1 in the traveling direction.

The traveling trajectory generation unit 50e of the controller 50 derives the left front boundary line FBL based on the output of the left front monitoring device 55L and derives the fact that the widening portion WP1 exists on the left side of the front construction target range. In addition, the traveling trajectory generation unit 50e derives the right front boundary line FBR based on the output of the right front monitoring device 55R and derives the fact that the widening portion WP does not exist on the right side of the front construction target range.

In this case, the traveling trajectory generation unit 50e determines whether the length LT1 of the widening portion WP1 is equal to or larger than the predetermined distance LX or is smaller than the distance LX. In the example shown in Fig. 8, the traveling trajectory generation unit 50e determines that the length LT1 of the widening portion WP1 is smaller than the distance LX.

In a case where the length LT1 of the widening portion WP1 is determined to be smaller than the distance LX, the traveling trajectory generation unit 50e determines that the widening portion WP1 is relatively short. Then, the traveling trajectory generation unit 50e generates a straight line that bisects the front construction target range as a traveling trajectory assuming that the width of a portion where the widening portion WP1 exists in the front construction target range (road width) is the same as a width WD1 of a portion where the widening portion WP1 does not exist in the front construction target range. In the example shown in Fig. 8, the width of the portion where the widening portion WP1 exists in the front construction target range (road width) gradually widens from the width WD1 at a position shown by an arrow AR10, becomes a width WD2 (maximum width) at a position shown by an arrow AR11, gradually narrows from the width WD2 at a position shown by an arrow AR12, and becomes a width WD3 at a position shown by an arrow AR13. The width WD3 is the same as the width WD1. In this case, the traveling trajectory generation unit 50e assumes that the width WD1 of the front construction target range is unchanged over at least the distance LX and generates a straight line that bisects the front construction target range having the width WD1 as a traveling trajectory RP1.

The steering control unit 50b outputs a steering command to the steering device 53 such that the center point of the asphalt finisher 100 moves along the traveling trajectory RP1 generated by the traveling trajectory generation unit 50e. In the example shown in Fig. 8, the steering control unit 50b causes the asphalt finisher 100 to travel straight without changing a steering angle while the asphalt finisher 100 passes through the widening portion WP1.

The screed expansion and contraction control unit 50c starts the expansion of the left rear screed 31L when the left front end portion of the left rear screed 31L has reached the position shown by the arrow AR10 and stops the expansion of the left rear screed 31L when the left front end portion of the left rear screed 31L has reached the position shown by the arrow AR11. In addition, the screed expansion and contraction control unit 50c starts the contraction of the left rear screed 31L when the left front end portion of the left rear screed 31L has reached the position shown by the arrow AR12 and stops the contraction of the left rear screed 31L when the left front end portion of the left rear screed 31L has reached the position shown by the arrow AR13.

The transport amount adjusting unit 50f starts increasing the left target transport speed at a time point when it is determined that the left front end portion of the left rear screed 31L has reached the position shown by the arrow AR10 after a predetermined time. Then, the left target transport speed gradually increases for a while even after the left front end portion of the left rear screed 31L has passed through the position shown by the arrow AR10. After then, the transport amount adjusting unit 50f stops increasing the left target transport speed at a time point when it is determined that the left front end portion of the left rear screed 31L has reached the position shown by the arrow AR11 after a predetermined time. Then, the left target transport speed is maintained as it is for a while even after the left front end portion of the left rear screed 31L has passed through the position shown by the arrow AR11. After then, the transport amount adjusting unit 50f starts reducing the left target transport speed at a time point when it is determined that the left front end portion of the left rear screed 31L has reached the position shown by the arrow AR12 after a predetermined time. Then, the left target transport speed gradually decreases for a while even after the left front end portion of the left rear screed 31L has passed through the position shown by the arrow AR12. After then, the transport amount adjusting unit 50f stops reducing the left target transport speed at a time point when it is determined that the left front end portion of the left rear screed 31L has reached the position shown by the arrow AR13 after a predetermined time. Then, the left target transport speed is maintained as it is even after the left front end portion of the left rear screed 31L has passed through the position shown by the arrow AR13.

In the example shown in Fig. 8, until the left front end portion of the left rear screed 31L reaches the widening portion WP1, the protruding amount WL of the left rear screed 31L is a value WL1, and the protruding amount WR of the right rear screed 31R is a value WR1. The value WL1 and the value WR1 are the same.

After then, while the left front end portion of the left rear screed 31L passes through the widening portion WP1, the protruding amount WL of the left rear screed 31L increases to a value WL2 and then returns to the value WL1. The protruding amount WR of the right rear screed 31R does not increase even while the left front end portion of the left rear screed 31L passes through the widening portion WP1 and is maintained at the value WR1.

As described above, while the left front end portion of the left rear screed 31L passes through the widening portion WP1, the left target transport speed temporarily increases, but the right target transport speed does not change.

In the construction site shown in Fig. 9, at the present time point, the front construction target range includes the widening portion WP2 on the left side (+Y side) in the traveling direction. The widening portion WP2 is formed to extend over a long distance beyond the distance LX in the traveling direction.

The traveling trajectory generation unit 50e of the controller 50 derives the left front boundary line FBL based on the output of the left front monitoring device 55L and derives the fact that the widening portion WP2 exists on the left side of the front construction target range. In addition, the traveling trajectory generation unit 50e derives the right front boundary line FBR based on the output of the right front monitoring device 55R and derives the fact that the widening portion WP does not exist on the right side of the front construction target range.

In this case, the traveling trajectory generation unit 50e determines whether the length of the widening portion WP2 is equal to or larger than the predetermined distance LX or is smaller than the distance LX. In the example shown in Fig. 9, the traveling trajectory generation unit 50e determines that the length of the widening portion WP2 is equal to or larger than the distance LX.

In a case where the length of the widening portion WP2 is determined to be equal to or larger than the distance LX, the traveling trajectory generation unit 50e determines that the widening portion WP2 is relatively long. Then, the traveling trajectory generation unit 50e generates a line that bisects the front construction target range including the widening portion WP2 as a traveling trajectory. In the example shown in Fig. 9, the width of the front construction target range gradually widens from the width WD1 at the position shown by the arrow AR10 and becomes the width WD2 (maximum width) at the position shown by the arrow AR11. In this case, the traveling trajectory generation unit 50e generates the line that bisects the front construction target range, that is, a line including a curved line portion as a traveling trajectory RP2.

Specifically, the traveling trajectory RP2 includes a first straight line portion that matches a front-rear axis AX11 of the asphalt finisher 100 before a front end of the asphalt finisher 100 reaches the position shown by the arrow AR10, a second straight line portion that matches a front-rear axis AX12 of the asphalt finisher 100 after a rear end of the asphalt finisher 100 has passed through the position shown by the arrow AR11, and a curved line portion that smoothly connects the first straight line portion and the second straight line portion to each other.

The steering control unit 50b outputs a steering command to the steering device 53 such that the center point of the asphalt finisher 100 moves along the traveling trajectory RP2 generated by the traveling trajectory generation unit 50e. In the example shown in Fig. 9, the steering control unit 50b starts steering to the left before the left front end portion of the left rear screed 31L reaches the position shown by the arrow AR10 and ends steering to the left before the left front end portion of the left rear screed 31L reaches the position shown by the arrow AR11.

The screed expansion and contraction control unit 50c starts the expansion of each of the left rear screed 31L and the right rear screed 31R when the left front end portion of the left rear screed 31L has reached the position shown by the arrow AR10 and stops the expansion of each of the left rear screed 31L and the right rear screed 31R when the left front end portion of the left rear screed 31L has reached the position shown by the arrow AR11.

The transport amount adjusting unit 50f starts increasing each of the left target transport speed and the right target transport speed at a time point when it is determined that the left front end portion of the left rear screed 31L has reached the position shown by the arrow AR10 after a predetermined time. Then, each of the left target transport speed and the right target transport speed gradually increases for a while even after the left front end portion of the left rear screed 31L has passed through the position shown by the arrow AR10. After then, the transport amount adjusting unit 50f stops increasing each of the left target transport speed and the right target transport speed at a time point when it is determined that the left front end portion of the left rear screed 31L has reached the position shown by the arrow AR11 after a predetermined time. Then, each of the left target transport speed and the right target transport speed is maintained as it is even after the left front end portion of the left rear screed 31L has passed through the position shown by the arrow AR11.

In the example shown in Fig. 9, until the left front end portion of the left rear screed 31L reaches the widening portion WP2, the protruding amount WL of the left rear screed 31L is the value WL1, and the protruding amount WR of the right rear screed 31R is a value WR11. A value WL11 and the value WR11 are the same.

After then, until the left front end portion of the left rear screed 31L reaches the position shown by the arrow AR11, the protruding amount WL of the left rear screed 31L increases to a value WL12, and the protruding amount WR of the right rear screed 31R also increases to a value WR12. The value WL12 and the value WR12 are the same.

Then, after the left front end portion of the left rear screed 31L has reached the position shown by the arrow AR11, the protruding amount WL of the left rear screed 31L is maintained at the value WL12, and the protruding amount WR of the right rear screed 31R is also maintained at the value WR12.

For this reason, until the left front end portion of the left rear screed 31L reaches the position shown by the arrow AR10 and then reaches the position shown by the arrow AR11, the left target transport speed and the right target transport speed increase at the substantially same rate.

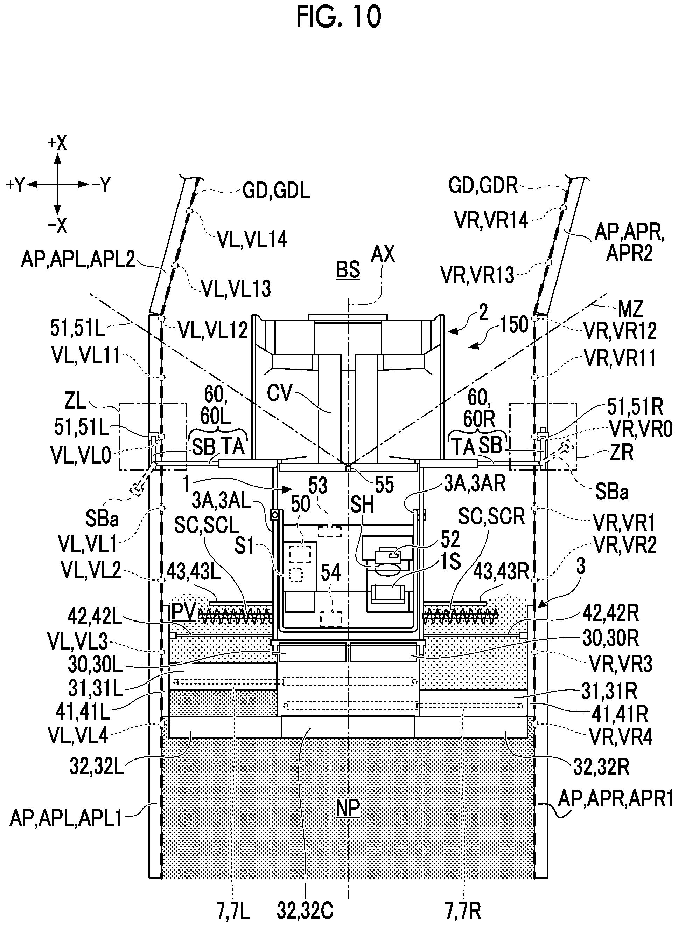

Next, an asphalt finisher 150 that is another example of the road machine according to the embodiment of the present disclosure will be described with reference to Fig. 10.

The asphalt finisher 150 shown in Fig. 10 is different from the asphalt finisher 100 shown in Fig. 2 in that only one front monitoring device 55 is attached to the front end central portion of the upper surface of the tractor 1, but is the same as the asphalt finisher 100 shown in Fig. 2 in terms of other points. A two-dot chain line shown in Fig. 10 represents a boundary of the monitoring range MZ of the front monitoring device 55.

The front monitoring device 55 shown in Fig. 10 is configured to be capable of simultaneously acquiring information related to a feature (left object APL) that defines the boundary line of the front construction target range on the left side positioned in front of the hopper 2 and information related to a feature (right object APR) that defines the boundary line of the front construction target range on the right side positioned in front of the hopper 2. In addition, the front monitoring device 55 shown in Fig. 10 may be configured to be capable of monitoring a state in the hopper 2 such as a state of a remaining amount of the paving material PV supplied into the hopper 2. In addition, the front monitoring device 55 shown in Fig. 10 may be configured to be capable of monitoring a space positioned in front of the hopper 2 such as a state of the dump truck that transports the paving material PV supplied into the hopper 2.

As described above, as shown in Figs. 1 and 2, the asphalt finisher 100 that is an example of the road machine according to the embodiment of the present disclosure includes the tractor 1, the hopper 2 which is provided in front of the tractor 1 and which receives the paving material PV, the conveyor CV which feeds the paving material PV in the hopper 2 to the rear of the tractor 1, the screw SC which spreads the paving material PV fed by the conveyor CV at the rear of the tractor 1, the screed 3 which levels the paving material PV spread by the screw SC at the rear of the screw SC, and the control device (controller 50) that calculates coordinates on the boundary line (guide line GD) in a predetermined coordinate system based on information related to a feature (object AP) that defines the boundary line (guide line GD) of the construction target range positioned in front of the screed 3.

In addition, in the asphalt finisher 100, the screed 3 is configured to be capable of expanding and contracting in the vehicle width direction. For this reason, the controller 50 can expand and contract the screed 3 such that coordinates on the boundary line (guide line GD) and coordinates of an end portion of the screed 3 match each other.

With the configuration, the controller 50 can recognize a change in a direction of the boundary line (guide line GD) before the screed 3 reaches a portion where the direction of the boundary line (guide line GD) changes. For this reason, the controller 50 can appropriately control the expansion and contraction amount of the screed 3 compared to a case where the screed is expanded and contracted such that an interval existing between the end portion of the screed 3 and the boundary line (guide line GD) is recognized and then the interval is decreased. In other words, the controller 50 can suppress the generation of the interval between the end portion of the screed 3 and the boundary line (guide line GD).

In addition, in the asphalt finisher 100, the controller 50 may be configured to calculate coordinates on the boundary line (guide line GD) each time the tractor 1 advances by a predetermined distance. In the example shown in Fig. 2, the controller 50 is configured to intermittently calculate and store coordinates of each of the point VL and the point VR on the boundary line (guide line GD).

The configuration has an effect in which it can be suppressed that a calculation load related to calculation of coordinates becomes needlessly high.

In addition, in other words, the controller 50 is configured to expand and contract the screed 3 such that coordinates on the boundary line (guide line GD) calculated at the first time point become target coordinates of the end portion of the screed 3 at the second time point after the first time point.

With the configuration, the controller 50 can recognize a change in the direction of the boundary line (guide line GD) before the screed 3 reaches the portion where the direction of the boundary line (guide line GD) changes. For this reason, the configuration has an effect in which the expansion and contraction amount of the screed 3 can be more appropriately controlled.

In addition, the asphalt finisher 100 may include the object detection device 51 that acquires information related to the feature (object AP) which defines the boundary line (guide line GD) of the road, which is the construction target positioned in front of the screed 3. In addition, the object detection device 51 may be disposed in front of the screed 3. In the example shown in Fig. 2, the object detection device 51 is disposed in front of the tractor 1 which is in front of the screed 3.

With the configuration, the object detection device 51 can acquire information related to the portion where the direction of the boundary line (guide line GD) changes (for example, a relative position with respect to the vehicle body (tractor 1), a distance image, an image, or the like) before the screed 3 reaches the portion. For this reason, the configuration has an effect in which the controller 50 can recognize a change in the direction of the boundary line (guide line GD) before the screed 3 reaches the portion where the direction of the boundary line (guide line GD) changes.

In addition, in the control system DS of the asphalt finisher 100 according to the embodiment of the present disclosure, as shown in Fig. 8 or 9, the controller 50 may be configured to set the traveling trajectory RP of the tractor 1 based on information related to a feature (object AP) that defines the boundary line (front boundary line FB) of the construction target range positioned in front of the tractor 1.

With the configuration, the control system DS has an effect in which the traveling direction of the asphalt finisher 100 can be more appropriately determined.

In addition, the controller 50 may be configured to be capable of causing the tractor 1 to travel along the set traveling trajectory RP by controlling the traveling direction of the tractor 1. The control of the traveling direction of the tractor 1 means, for example, control of the steering angle of the front wheel 6 which is a steering wheel in a case of a wheel type asphalt finisher and means control of a difference between the rotation speeds of right and left crawlers in a case of a crawler type asphalt finisher.

With the configuration, the control system DS has an effect in which the asphalt finisher 100 can be caused to travel along the set traveling trajectory RP.

In addition, the controller 50 may be configured to determine the traveling direction of the tractor 1 based on information related to a feature (object AP) that defines the boundary line (front boundary line FB) of the construction target range positioned in front of the tractor 1.

In addition, in the control system DS of the asphalt finisher 100 according to the embodiment of the present disclosure, as shown in Fig. 8 or 9, the controller 50 may be configured to set the target transport speed that is a target value of a speed at which the transport device transports the paving material PV based on information related to a feature (object AP) that defines the boundary line (front boundary line FB) of the construction target range positioned at the front.

With the configuration, the control system DS has an effect in which a speed at which the transport device transports the paving material PV is more appropriately controlled. For this reason, the control system DS can suppress the occurrence of a situation where the holding amount becomes insufficient and a recessed portion is formed in the surface of the newly constructed pavement body NP. In addition, the control system DS can suppress that the holding amount excessively increases, a load received by the rear screed 31 increases, and slipping of a wheel or the like occurs. For this reason, the control system DS can suppress the generation of an error in a traveling speed, a traveling distance, or the like calculated based on the output of the traveling speed sensor S1 or the like or a change of the traveling direction of the asphalt finisher 100 into a wrong direction. In addition, when the feeding speed of the conveyor CV and the rotation speed of the screw SC are rapidly increased in order to recover from the shortage of the holding amount, there is a possibility in which an engine load temporarily increases, resulting in power shortage (horsepower shortage), but the control system DS can also suppress the occurrence of such a situation.

In addition, the transport device may include the conveyor CV that feeds the paving material PV in the hopper 2 to the rear of the tractor 1 and the screw SC that spreads the paving material PV fed by the conveyor CV at the rear of the tractor 1. In this case, the controller 50 may be configured to control movements of the conveyor CV and the screw SC based on the target transport speed.

With the configuration, the control system DS has an effect in which the speed at which the transport device transports the paving material PV is more appropriately controlled by controlling the feeding speed of the conveyor CV and the rotation speed of the screw SC.

In addition, the controller 50 may be configured to separately set a left target transport speed that is a target value of a speed at which the transport device transports the paving material PV toward the left rear screed 31L and a right target transport speed that is a target value of a speed at which the transport device transports the paving material PV toward the right rear screed 31R.

With the configuration, even in a case where the protruding amount of the left rear screed 31L and the protruding amount of the right rear screed 31R are different from each other, the control system DS has an effect in which an appropriate amount of the paving material PV can be transported to each of the left rear screed 31L and the right rear screed 31R.

In addition, the boundary line (front boundary line FB) of the construction target range may include the boundary line (left front boundary line FBL) of the construction target range on the left side and the boundary line (right front boundary line FBR) of the construction target range on the right side.

In addition, information related to a feature (object AP) that defines the boundary line (front boundary line FB) of the construction target range may be generated based on an output of the space recognition device outside the asphalt finisher 100 or may be generated based on an output of the space recognition device (front monitoring device 55) mounted on the asphalt finisher 100.

In addition, the space recognition device may be configured such that the controller 50 can calculate a distance between the asphalt finisher 100 and the transport vehicle positioned in front of the asphalt finisher 100.

In addition, the space recognition device may be configured such that the controller 50 can detect an object positioned in the surroundings of the asphalt finisher 100.

The preferable embodiment of the present invention has been described in detail hereinbefore. However, the present invention is not limited to the embodiment described above and is not limited to an embodiment to be described later. Various modifications, substitutions, or the like can be applied to the embodiment that is described above or to be described later without departing from the scope of the present invention. In addition, characteristics described separately can be combined insofar as technical inconsistencies do not occur.

For example, in the embodiment described above, the object detection device 51 is configured to acquire information related to a feature (object AP) which defines the boundary line (guide line GD) of the construction target range positioned in front of the screed 3. However, the controller 50 may be configured to acquire information related to a feature (object AP) from design data stored in advance in the volatile storage device or the non-volatile storage device. In this case, acquisition of the information related to a feature (object AP) by the object detection device 51 may be omitted.

In addition, the object detection device 51 is attached to the asphalt finisher 100 in the embodiment described above, but may be attached to a moving body other than the asphalt finisher 100 such as a vehicle and a multicopter.

In addition, the front monitoring device 55 is attached to the asphalt finisher 100 in the embodiment described above, but may be attached to a moving body other than the asphalt finisher 100 such as a vehicle and a multicopter, or may be attached to a structure such as a steel tower provided at a construction site.

In addition, at least one of the coordinate calculation unit 50a, the steering control unit 50b, the screed expansion and contraction control unit 50c, the boundary line deriving unit 50d, the traveling trajectory generation unit 50e, and the transport amount adjusting unit 50f for realizing various types of functions of the controller 50 may be mounted on another control device (calculation device) other than the controller 50. The other control device may be a control device (calculation device) included in the space recognition device.

### Brief Description of the Reference Symbols

1 tractor
1S driver's seat
2 hopper
3 screed
3A leveling arm
3AL left leveling arm
3AR right leveling arm
5 rear wheel
6 front wheel
7 screed expanding and contracting cylinder
7L left screed expanding and contracting cylinder
7R right screed expanding and contracting cylinder
30 front screed
30L left front screed
30R right front screed
31 rear screed
31L left rear screed
31R right rear screed
32 tread plate
32C central tread plate
32L left tread plate
32R right tread plate
41 side plate
41L left side plate
41R right side plate
42 mold board
42L left mold board
42R right mold board
43 retaining plate
43L left retaining plate
43R right retaining plate
50 controller
50a coordinate calculation unit
50b steering control unit
50c screed expansion and contraction control unit
50d boundary line deriving unit
50e traveling trajectory generation unit
50f transport amount adjusting unit
51 object detection device
51L left object detection device
51R right object detection device
52 vehicle-mounted display device
53 steering device
54 screed expanding and contracting device
55 front monitoring device
55L left front monitoring device
55R right front monitoring device
56 conveyor control device
57 screw control device
60 attachment member
60L left attachment member
60R right attachment member
100 asphalt finisher
AP object
APL left object
APL1 first left object
APL2 second left object
APR right object
APR1 first right object
APR2 second right object
AX front-rear axis
BS roadbed
CL center line
CV conveyor
CVL left conveyor
CVR right conveyor
DS control system
GD guide line
GDL left guide line
GDR right guide line
NP newly constructed pavement body
PV paving material
S1 traveling speed sensor
S2 height sensor
S2L left height sensor
S2R right height sensor
SB, SBa pivoting member
SC screw
SCL left screw
SCR right screw
SH steering wheel
TA expanding and contracting member
ZL left monitoring range
ZR right monitoring range

## Claims

1. A road paving machine (100, 150) comprising:
a tractor (1);
a hopper (2) that is provided in front of the tractor (1) and that receives a paving material (PV);
a conveyor (CV) that feeds the paving material (PV) in the hopper (2) to a rear of the tractor (1);
a screw (SC) that spreads the paving material (PV) fed by the conveyor (CV) at the rear of the tractor (1);
a screed (3) that levels the paving material (PV) spread by the screw (SC) at a rear of the screw (SC); and
a control device (50) that includes a traveling trajectory generation unit (50e),
wherein
the traveling trajectory generation unit (50e) sets a traveling trajectory (RP) of the tractor (1), which is a trajectory followed by a center point of the road paving machine (100, 150), based on information related to a feature (AP) that defines a boundary line (FB) of a construction target range positioned in front of the tractor (1), and
in a case where the construction target range includes a widening portion (WP) where a width of the construction target range partially extends in a width direction of the construction target range, the traveling trajectory (RP) of the tractor (1) is set assuming that the widening portion (WP) does not exist when a length (LT1) of the widening portion (WP) in a traveling direction of the tractor (1) is equal to or smaller than a predetermined distance.

2. The road paving machine (100, 150) according to claim 1,
wherein the control device (50) causes the tractor (1) to travel along the set traveling trajectory (RP) by controlling the traveling direction of the tractor (1).

3. The road paving machine (100, 150) according to claim 1 or 2,
wherein the boundary line (FB) of the construction target range includes a boundary line (FBL) of the construction target range on a left side and a boundary line (FBR) of the construction target range on a right side.

4. The road paving machine (100, 150) according to claim 1,
wherein the information related to the feature (AP) that defines the boundary line (FB) of the construction target range is generated based on an output of a space recognition device (55) outside the road paving machine (100, 150).

5. The road paving machine (100, 150) according to claim 1,
wherein the information related to the feature (AP) that defines the boundary line (FB) of the construction target range is generated based on an output of a space recognition device (55) mounted on the road paving machine (100, 150).

6. The road paving machine (100, 150) according to claim 4 or 5,
wherein the space recognition device (55) is configured such that the control device (50) is capable of calculating a distance between the road paving machine (100, 150) and a transport vehicle positioned in front of the road paving machine (100, 150).

7. The road paving machine (100, 150) according to claim 4 or 5,
wherein the space recognition device (55) is configured such that the control device (50) is capable of detecting an object positioned in surroundings of the road paving machine (100, 150).

8. The road paving machine (100, 150) according to claim 1,
wherein the control device (50) is configured to determine the traveling direction of the tractor (1) based on the information related to the feature (AP) that defines the boundary line (FB) of the construction target range.

## Patentansprüche

1. Straßenfertiger (100, 150) umfassend:
einen Traktor (1);
einen Trichter (2), der vor dem Traktor (1) vorgesehen ist und der ein Straßendeckenmaterial (PV) aufnimmt;
einen Förderer (CV), der das Straßendeckenmaterial (PV) in dem Trichter (2) zu einer Rückseite des Traktors (1) fördert;
eine Schnecke (SC), die das von dem Förderer (CV) geförderte Straßendeckenmaterial (PV) an der Rückseite des Traktors (1) verteilt;
eine Bohle (3), die das von der Schnecke (SC) verteilte Straßendeckenmaterial (PV) an einer Rückseite der Schnecke (SC) nivelliert; und
eine Steuervorrichtung (50), die eine Fahrtrajektorienerzeugungseinheit (50e) umfasst,
wobei
die Fahrtrajektorienerzeugungseinheit (50e) eine Fahrtrajektorie (RP) des Traktors (1) einstellt, die eine Trajektorie ist, der ein Mittelpunkt des Straßenfertigers (100, 150) folgt, basierend auf Informationen bezüglich eines Merkmals (AP), das eine Begrenzungslinie (FB) eines vor dem Traktor (1) positionierten Bauzielbereichs definiert, und
in einem Fall, bei dem der Bauzielbereich einen Verbreiterungsabschnitt (WP) umfasst, bei dem sich eine Breite des Bauzielbereichs teilweise in einer Breitenrichtung des Bauzielbereichs erstreckt, wird die Fahrtrajektorie (RP) des Traktors (1) unter der Annahme eingestellt, dass der Verbreiterungsabschnitt (WP) nicht existiert, wenn eine Länge (LT1) des Verbreiterungsabschnitts (WP) in einer Fahrtrichtung des Traktors (1) gleich oder kleiner als ein vorbestimmter Abstand ist.

2. Straßenfertiger (100, 150) nach Anspruch 1,
wobei die Steuervorrichtung (50) den Traktor (1) veranlasst, entlang der eingestellten Fahrtrajektorie (RP) zu fahren, indem sie die Fahrtrichtung des Traktors (1) steuert.

3. Straßenfertiger (100, 150) nach Anspruch 1 oder 2,
wobei die Begrenzungslinie (FB) des Bauzielbereichs eine Begrenzungslinie (FBL) des Bauzielbereichs auf einer linken Seite und eine Begrenzungslinie (FBR) des Bauzielbereichs auf einer rechten Seite umfasst.

4. Straßenfertiger (100, 150) nach Anspruch 1,
wobei die Informationen bezüglich des Merkmals (AP), das die Begrenzungslinie (FB) des Bauzielbereichs definiert, auf der Grundlage einer Ausgabe einer Raumerkennungsvorrichtung (55) außerhalb des Straßenfertigers (100, 150) erzeugt werden.

5. Straßenfertiger (100, 150) nach Anspruch 1,
wobei die Informationen bezüglich des Merkmals (AP), das die Begrenzungslinie (FB) des Bauzielbereichs definiert, auf der Grundlage einer Ausgabe einer an dem Straßenfertiger (100, 150) montierten Raumerkennungsvorrichtung (55) erzeugt werden.

6. Straßenfertiger (100, 150) nach Anspruch 4 oder 5,
wobei die Raumerkennungsvorrichtung (55) so konfiguriert ist, dass die Steuervorrichtung (50) in der Lage ist, einen Abstand zwischen dem Straßenfertiger (100, 150) und einem vor dem Straßenfertiger (100, 150) positionierten Transportfahrzeug zu berechnen.

7. Straßenfertiger (100, 150) nach Anspruch 4 oder 5,
wobei die Raumerkennungsvorrichtung (55) so konfiguriert ist, dass die Steuervorrichtung (50) in der Lage ist, ein Objekt zu detektieren, das in Umgebung des Straßenfertigers (100, 150) positioniert ist.

8. Straßenfertiger (100, 150) nach Anspruch 1,
wobei die Steuervorrichtung (50) konfiguriert ist, dass sie die Fahrtrichtung des Traktors (1) auf der Grundlage der Informationen bezüglich des Merkmals (AP) bestimmt, das die Begrenzungslinie (FB) des Bauzielbereichs definiert.

## Revendications

1. Une machine de revêtement routier (100, 150) comprenant :
un tracteur (1) ;
une trémie (2) qui est pourvue à l'avant du tracteur (1) et qui reçoit un matériau de revêtement routier (PV) ;
un transporteur (CV) qui alimente le matériau de revêtement routier (PV) dans la trémie (2) jusqu'à une partie arrière du tracteur (1) ;
une vis (SC) qui répand le matériau de revêtement routier (PV) alimenté par le transporteur (CV) à l'arrière du tracteur (1) ;
une table (3) qui nivelle le matériau de revêtement routier (PV) répandu par la vis (SC) au niveau d'une partie arrière de la vis (SC) ; et
un dispositif de commande (50) qui commande une unité de génération de trajectoire de déplacement (50e),
dans laquelle :
l'unité de génération de trajectoire de déplacement (50e) détermine une trajectoire de déplacement (RP) du tracteur (1), qui est une trajectoire suivie par un point central de la machine de revêtement routier (100, 150), sur la base d'une information relative à une caractéristique (AP) qui définit une ligne de limite (FB) d'une plage de construction cible positionnée à l'avant du tracteur (1), et
dans un cas dans lequel la plage de construction cible comprend une partie d'élargissement (WP) dans laquelle une largeur de la plage de construction cible s'étend partiellement dans une direction de largeur de la plage de construction cible, la trajectoire de déplacement (RP) du tracteur (1) est déterminée en supposant que la partie d'élargissement (WP) n'existe pas lorsqu'une longueur (LT1) de la partie d'élargissement (WP) dans une direction de déplacement du tracteur (1) est égale ou inférieure à une distance prédéterminée.

2. La machine de revêtement routier (100, 150) selon la revendication 1,
dans laquelle le dispositif de commande (50) amène le tracteur (1) à se déplacer le long de la trajectoire de déplacement de consigne (RP) en commandant la direction de déplacement du tracteur (1).

3. La machine de revêtement routier (100, 150) selon la revendication 1 ou 2,
dans laquelle la ligne de limite (FB) de la plage de construction cible comprend une ligne de limite (FBL) de la plage de construction cible sur un côté gauche et une ligne de limite (FBR) de la plage de construction cible sur un côté droit.

4. La machine de revêtement routier (100, 150) selon la revendication 1,
dans laquelle l'information relative à la caractéristique (AP) qui définit la ligne de limite (FB) de la plage de construction cible est générée sur la base d'un résultat d'un dispositif de reconnaissance d'espace (55) à l'extérieur de la machine de revêtement routier (100, 150).

5. La machine de revêtement routier (100, 150) selon la revendication 1,
dans laquelle l'information relative à la caractéristique (AP) qui définit la ligne de limite (FB) de la plage de construction cible est générée sur la base d'un résultat d'un dispositif de reconnaissance d'espace (55) monté sur la machine de revêtement routier (100, 150).

6. La machine de revêtement routier (100, 150) selon la revendication 4 ou 5,
dans laquelle le dispositif de reconnaissance d'espace (55) est configuré de sorte que le dispositif de commande (50) est capable de calculer une distance entre la machine de revêtement routier (100, 150) et un véhicule de transport positionné à l'avant de la machine de revêtement routier (100, 150).

7. La machine de revêtement routier (100, 150) selon la revendication 4 ou 5,
dans laquelle le dispositif de reconnaissance d'espace (55) est configuré de sorte que le dispositif de commande (50) est capable de détecter un objet positionné dans les environs de la machine de revêtement routier (100, 150).

8. La machine de revêtement routier (100, 150) selon la revendication 1,
dans laquelle le dispositif de commande (50) est configuré pour déterminer la direction de déplacement du tracteur (1) sur la base de l'information relative à la caractéristique (AP) qui définit la ligne de limite (FB) de la plage de construction cible.
